(19) **Europäisches Patentamt / European Patent Office / Office européen des brevets**

(11) **EP 4 498 292 A1**

(12) **EUROPEAN PATENT APPLICATION**

(43) Date of publication:
**29.01.2025 Bulletin 2025/05**

(21) Application number: **24159782.2**

(22) Date of filing: **26.02.2024**

(51) International Patent Classification (IPC):
**G06N 5/01** (2023.01)

(52) Cooperative Patent Classification (CPC):
**G06N 5/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 JP 2023122127**

(71) Applicant: **Kabushiki Kaisha Toshiba**
**Tokyo 105-0023 (JP)**

(72) Inventors:
• **HIDAKA, Ryo**
  **Tokyo (JP)**
• **TATSUMURA, Kosuke**
  **Tokyo (JP)**
• **YAMASAKI, Masaya**
  **Tokyo (JP)**
• **NAKAYAMA, Jun**
  **Tokyo (JP)**

(74) Representative: **Marks & Clerk LLP**
**15 Fetter Lane**
**London EC4A 1BW (GB)**

(54) **INFORMATION PROCESSING DEVICE, INFORMATION PROCESSING METHOD, COMPUTER PROGRAM, AND CIRCUIT INFORMATION**

(57)    An information processing device (20) according to an embodiment executes processing on data. The information processing device (20) acquires the data and generates a combination optimization problem based on the acquired data. The information processing device (20) causes a solver device (40) to solve the combination optimization problem. The information processing device (20) sets state information to a first state in response to starting generation of the combination optimization problem, and sets the state information to a second state in response to acquiring the data. The information processing device acquires a solution of the combination optimization problem from the solver device (40), and executes a process based on the solution. The information processing device (20) changes the process based on the solution by the state information in executing the process based on the solution.

FIG.7

EP 4 498 292 A1

**Description**

FIELD

Embodiments described herein relate generally to an information processing device, an information processing method, a computer program, and circuit information.

BACKGROUND

Optimization of systems in various fields of application, such as control, finance, communication, logistics, and chemistry, is often mathematically reduced to combination optimization problems. An information processing system that implements various information processing functions such as recognition, determination, and planning by solving a combination optimization problem and enhances efficiency of such functions has been proposed.

The combination optimization problem is to define a cost function using a plurality of decision variables (for example, discrete variables) representing a state of a system to be optimized as arguments and solve a combination of values of a plurality of decision variables that minimizes the defined cost function. The state of the system expressed by the plurality of decision variables is referred to as a solution. In the combination optimization problem, as the number of decision variables increases, the number of states that can be taken as a solution increases exponentially. An increase in the number of states that can be taken as a solution is referred to as a combination explosion. The combinational optimization of selecting one optimum solution from all solution candidates is known as a problem that is difficult to calculate. Performing large-scale combinatorial optimization in a short time is still a challenge.

In recent years, a specific purpose device called an Ising machine that searches a ground state of an Ising spin model has attracted attention. A problem of searching the ground state of the Ising spin model is called an Ising problem. The Ising problem is a combination optimization problem that minimizes a cost function given by a quadratic function of an Ising spin that is one of binary variables. In the Ising problem, the cost function is referred to as Ising energy. Many practical combination optimization problems can be converted into Ising problems. The Ising machine can solve the Ising problem at high speed. Therefore, many practical combination optimization problems can be solved at high speed using an Ising machine.

In a case where the situation changes from moment to moment, a new combination optimization problem may be generated and solved according to the change in the situation, and processing may be performed based on the obtained solution. For example, in a case where the combination optimization problem is applied to a transaction device that electronically trades stocks in a financial transaction market, a new combination optimization problem is generated according to a price change of stocks, and a transaction is performed based on the obtained solution. Moreover, in a case where the combination optimization problem is applied to a control system that controls a moving object based on an image obtained by capturing a surrounding scene, a new combination optimization problem is generated according to a change in the image, and the moving object is controlled based on the obtained solution.

However, it takes a time to obtain a solution after generating the combination optimization problem. Therefore, in a case where the situation changes during the processing period from the generation of the combination optimization problem to the acquisition of the solution, there is a possibility that the executed processing is not effective even if a process based on the obtained solution is performed.

BRIEF DESCRIPTION OF THE DRAWINGS

FIG. 1 is a diagram illustrating a model of an Ising problem;
FIG. 2 is a diagram illustrating internal variables used by a simulated bifurcation algorithm;
FIG. 3 is a flowchart illustrating a procedure of a process of a simulated bifurcation machine;
FIG. 4 is a diagram illustrating a configuration of an information processing system including an Ising machine;
FIG. 5 is a diagram illustrating a configuration of an information processing system including a simulated bifurcation machine;
FIG. 6 is a configuration diagram of a market system;
FIG. 7 is a configuration diagram of an information processing device according to the first embodiment;
FIG. 8 is a transition diagram of state information;
FIG. 9 is a flowchart illustrating a process of a process execution unit according to the first embodiment;
FIG. 10 is a timing diagram of a first example of a process of the information processing device according to the first embodiment;
FIG. 11 is a timing diagram of a second example of a process of the information processing device according to the first embodiment;

FIG. 12 is a timing diagram of a third example of a process of the information processing device according to the first embodiment;

FIG. 13 is a configuration diagram of an information processing device according to the second embodiment;

FIG. 14 is a flowchart illustrating a process of a process execution unit according to the second embodiment;

FIG. 15 is a configuration diagram of an information processing device according to the third embodiment;

FIG. 16 is a configuration diagram of an information processing device according to the fourth embodiment;

FIG. 17 is a flowchart illustrating a process of the solver device according to the fourth embodiment;

FIG. 18 is a timing diagram of a process of the information processing device according to the fourth embodiment;

FIG. 19 is a diagram illustrating an example of a configuration of a control system; and

FIG. 20 is a hardware configuration diagram of the information processing device.

DETAILED DESCRIPTION

An information processing device according to an embodiment executes processing on data. The information processing device includes a hardware processor connected to memories. The hardware processor is configured to acquire the data. The hardware processor is configured to generate a combination optimization problem based on the acquired data, and cause a solver device to solve the combination optimization problem. The hardware processor is configured to set state information to a first state in response to starting generation of the combination optimization problem, and set the state information to a second state in response to acquiring the data. The hardware processor is configured to acquire a solution of the combination optimization problem from the solver device, and execute a process based on the solution. The hardware processor is configured to change the process based on the solution by the state information in executing the process based on the solution.

Premise

Terms and techniques that are the premise of the description of the embodiments will be described.

The combination optimization problem is to define a cost function using a plurality of decision variables (for example, discrete variables) representing a state of a system to be optimized as arguments and solve a combination of values of a plurality of decision variables that minimizes the defined cost function.

The cost function includes a plurality of decision variables representing the state of the system as arguments, and is a linear or higher function of the decision variables.

For example, the cost function is represented by a linear function or a quadratic function of a plurality of decision variables. The cost function may be a cubic or higher function of the plurality of decision variables. In other words, the cost function is a function of summing a plurality of terms.

Each of the terms is a function that multiplies one or more and a predetermined number or less of the plurality of decision variables by a coefficient. The coefficient in each term of the plurality of terms is a real number and is also referred to as a weight value. Each term of the plurality of terms constituting the cost function is represented by multiplication of one or more decision variables among the decision variables and any one weight value among the weight values.

The state of the system expressed by the plurality of decision variables is referred to as a solution. A whole set of a plurality of solutions that is allowed to be taken by a state of a system is referred to as a solution space. A solution that gives the minimum value of the cost function is referred to as an exact solution. A solution that gives a value close to the minimum value of the cost function is referred to as a good solution.

The exact solution is to obtain an exact solution that gives a minimum value of a cost function of a combination optimization problem, and to ensure that the solution is an exact solution.

The heuristic solution is to find an exact solution that gives the minimum value of the cost function or a good solution that gives a value close to the minimum value of the cost function of a combination optimization problem. A heuristic solution is also referred to as a heuristic solution. The heuristic solution has no guarantee of an index representing the accuracy of the solution, namely, representing how close the heuristic solution gives a value to the minimum value of the cost function. The heuristic solution method can output a solution with practically significant accuracy in a shorter solving time than the exact solution method.

The calculation amount of the solution to the combination optimization problem is the amount of operation required to obtain a solution, for example, the number of times of productsum operation or the like. The solving time required to obtain a solution to the combination optimization problem depends not only on the amount of calculation but also on the configuration of the computer machine that processes the calculation. For example, the higher the computational parallelism and the operating frequency of the computer machine, the shorter the solving time.

The quadratic unconstrained binary optimization (QUBO) problem is an unconstrained quadratic optimization problem in which the decision variable is binary. In the QUBO problem, each of terms included in the cost function is represented by a quadratic expression or a linear expression of the decision variable. The QUBO problem in a narrow definition is a binary variable with a decision variable of zero or one. In the embodiment, the QUBO problem represents a problem of definition in a narrow sense in which the decision variable is zero or one. In the narrow-sense definition QUBO problem, the decision variable may also be referred to as a bit variable.

The cost function of the QUBO problem is expressed by $H_{total\_QUBO}$ of Expression (1).

$$H_{total\_QUBO} = \sum_{i=1}^{N}\sum_{j=1}^{N} Q_{ij}b_ib_j = 2\sum_{i=1}^{N}\sum_{i<j}^{N} Q_{ij}b_ib_j + \sum_{i=1}^{N} Q_{ii}b_i \qquad \cdots (1)$$

N is an integer of two or more and represents the number of decision variables. i and j represent an optional integer of one or more and N or less. $b_i$ is zero or one, and represents the i-th decision variable among the N decision variables. $b_j$ is zero or one, and represents the j-th decision variable among the N decision variables. $Q_{ij}$ represents coefficients of the i-th row and the j-th column included in the coefficient matrix (Q) of N×N. Note that $Q_{ij} = Q_{ji}$. $Q_{ii}$ is a coefficient included in the i-th row and the i-th column of the coefficient matrix (Q), and is a coefficient multiplied by the first-order term of the i-th decision variable. $Q_{ii}$ is referred to as a bias coefficient.

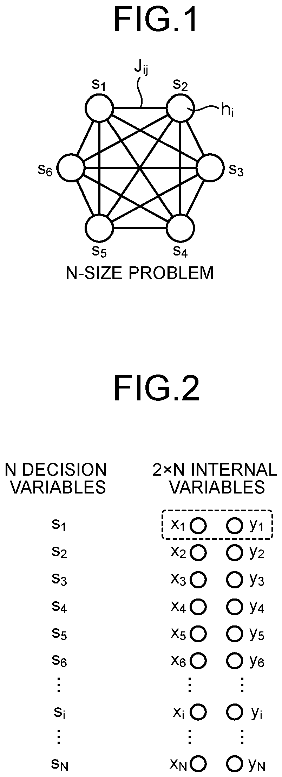

FIG. 1 is a diagram illustrating a model of an Ising problem. The Ising problem is a problem of searching a ground state of an Ising model. The Ising problem is one of the QUBO problems. The decision variable of the Ising problem represents a discrete variable of -1 or +1.

The cost function of the Ising problem is expressed by $H_{total\_Ising}$ of Expression (2).

$$H_{total\_Ising} = -\frac{1}{2}\sum_{i=1}^{N}\sum_{j=1}^{N} J_{ij}\,s_is_j + \sum_{i=1}^{N} h_is_i \qquad \cdots (2)$$

N is an integer of two or more and represents the number of decision variables. i and j represent an optional integer of one or more and N or less. $s_i$ is -1 or +1, and represents the i-th decision variable among the N decision variables. $s_j$ is -1 or +1, and represents the j-th decision variable among the N decision variables. $J_{ij}$ represents coefficients of the i-th row and the j-th column included in the coefficient matrix (J) of N×N. Note that $J_{ij} = J_{ji}$. $h_i$ is a coefficient multiplied by a first-order term of the i-th decision variable. $h_i$ is referred to as a bias coefficient.

The QUBO problem in which the decision variable is $s_i$ corresponds to the problem of the ground state search of the Ising model, which is one of the magnetic body models in the statistical mechanics. Therefore, $s_i$ may also be referred to as a spin variable. Moreover, N, which is the number of decision variables, may also be referred to as the number of spins. In addition, $H_{total\_Ising}$ may also be referred to as Ising energy. The vector represented by the N $s_i$s having the minimum value of $H_{total\_Ising}$ may be referred to as a ground state (ground spin arrangement).

The cost function of the QUBO problem and the cost function of the Ising problem differ only in the value of the constant. Therefore, the QUBO problem and the Ising problem are the same as a combination optimization problem. The QUBO problem and the Ising problem can be mutually converted. For example, the Ising problem and the QUBO problem are mutually converted by Expressions (3-1), (3-2), (3-3), and (3-4).

$$s_i = 2b_i - 1 \qquad \cdots (3\text{-}1)$$

$$J_{ij} = -\frac{Q_{ij}}{2} \; (i \neq j) \qquad \cdots (3\text{-}2)$$

$$J_{ii} = 0 \qquad \cdots (3\text{-}3)$$

$$h_i = \sum_{j=1}^{N} \frac{Q_{ij}}{2} \qquad \cdots (3\text{-}4)$$

The QUBO and Ising problems are known to be NP-complete. Many NP-hard problems can be converted into a QUBO problem or an Ising problem in polynomial time. Therefore, many practical combination optimization problems can be converted into the QUBO problem or the Ising problem.

The Ising machine is a device that solves an Ising problem. Many Ising machines solve Ising problems with heuristic solutions. Ising machines of various principles based on electronics, optics, quantum mechanics, statistical mechanics, and the like have been proposed. Many Ising machines can output an exact solution or a good solution in a short time.

The simulated bifurcation algorithm is an algorithm for solving a combination optimization problem. The simulated bifurcation algorithm is a heuristic solution algorithm.

For example, Hayato Goto, Kosuke Tatsumura and Alexander R. Dixon, "Combinatorial optimization by simulating adiabatic bifurcations in nonlinear Hamiltonian systems," Science Advances 5, eaav2372, 2019 and Hayato Goto, Kotaro Endo, Masaru Suzuki, Yoshisato Sakai, Taro Kanao, Yohei Hamakawa, Ryo Hidaka, Masaya Yamasaki and Kosuke Tatsumura, "High-performance combinatorial optimization based on classical mechanics", Science Advances 7, eabe7953, 2021 and JP 2021-060864 A, JP 2019-145010 A, JP 2019-159566 A, JP 2021-043667 A, and JP 2021-043589A disclose the simulated bifurcation algorithm. The simulated bifurcation algorithm is also referred to as a quantum inspired algorithm because it has been discovered with an idea from a quantum mechanical optimization method based on the quantum adiabatic theorem. The simulated bifurcation algorithm can solve a combination optimization problem in which the cost function is a quadratic function of a plurality of decision variables. The simulated bifurcation algorithm can also solve a combination optimization problem in which the cost function is a cubic or higher function of a plurality of decision variables, namely, a higher order binary optimization (HUBO) problem. For example, a simulated bifurcation algorithm that solves the HUBO problem is disclosed in JP 2021-043667 A. Moreover, the simulated bifurcation algorithm can also solve a combination optimization problem including variables of continuous values in some or all of a plurality of decision variables. A simulated bifurcation algorithm that solves a combination optimization problem including variables of continuous values in some or all of a plurality of decision variables is disclosed in JP 2021-043589A.

The simulated bifurcation machine is a calculation apparatus that executes a process according to the simulated bifurcation algorithm. A simulated bifurcation machine that solves a QUBO problem or an Ising problem is an example of an Ising machine. In the present embodiment, the simulated bifurcation machine solves the Ising problem.

FIG. 2 is a diagram illustrating internal variables used by the simulated bifurcation algorithm.

In a case of solving a combination optimization problem in which a cost function is represented using N decision variables ($s_1$ to $s_N$), the simulated bifurcation algorithm uses N position variables ($x_1$ to $x_N$) and N momentum variables ($y_1$ to $y_N$) as internal variables. The simulated bifurcation algorithm uses $2 \times N$ internal variables.

N position variables ($x_i$) correspond to N decision variables ($s_i$) on a one-to-one basis. The i-th position variable ($x_i$) among the N position variables corresponds to the i-th decision variable ($s_i$) among the N decision variables. N momentum variables ($y_i$) correspond to N decision variables ($s_i$) on a one-to-one basis. The i-th momentum variable ($y_i$) among the N momentum variables corresponds to the i-th decision variable ($s_i$) among the N decision variables.

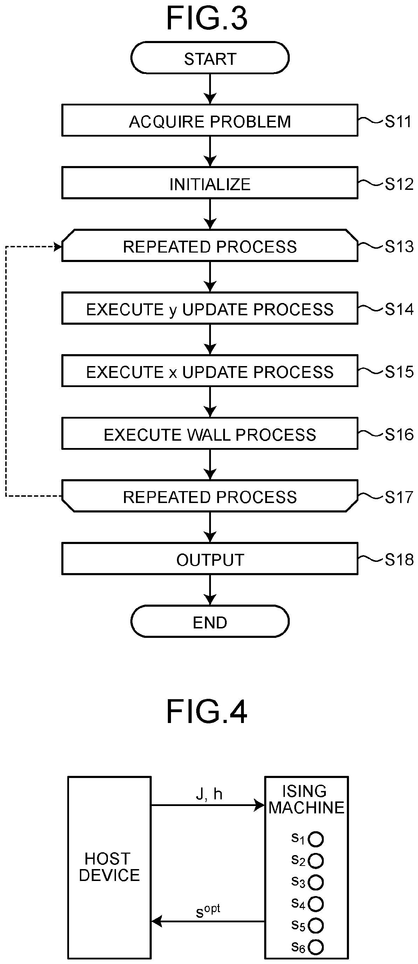

FIG. 3 is a flowchart illustrating a procedure of a process of the simulated bifurcation machine. The simulated bifurcation machine executes a process according to the simulated bifurcation algorithm in the procedure illustrated in FIG. 3.

First, in S11, the simulated bifurcation machine acquires the Ising problem. Specifically, the simulated bifurcation machine acquires J, which is a matrix including $N \times N$ coefficients, and h including N bias coefficients.

Subsequently, in S12, the simulated bifurcation machine initializes $2 \times N$ internal variables, namely, N position variables ($x_1$ to $x_N$) and N momentum variables ($y_1$ to $y_N$). The simulated bifurcation machine may acquire both or one of the initial values of the N position variables ($x_1$ to $x_N$) and the initial values of the N momentum variables ($y_1$ to $y_N$) from the outside. Moreover, the simulated bifurcation machine may generate the initial values of the N position variables ($x_1$ to $x_N$) and the initial values of the N momentum variables ($y_1$ to $y_N$) by a random number generated by a random number generation circuit, or may set the initial values to predetermined values. Note that, since the simulated bifurcation machine is heuristic, even in the same problem, when at least one of the initial values of the N position variables ($x_1$ to $x_N$) and the initial values of the N momentum variables ($y_1$ to $y_N$) is different, a different good solution may be output.

Subsequently, the simulated bifurcation machine repeats the process of S14 to S16 a preset number of times (loop processing between S13 and S17). The process of S14 to S16 is a matrix arithmetic process of matrix-multiplying N position variables ($x_1$ to $x_N$) by a matrix including weight values of N rows $\times$ N columns, and a time evolution process of time-evolving the N position variables ($x_1$ to $x_N$) and the N momentum variables ($y_1$ to $y_N$).

In S14, the simulated bifurcation machine executes a y update process of updating each of the N momentum variables ($y_1$ to $y_N$). In the update process of the i-th momentum variable ($y_i$) in the y update processing, the simulated bifurcation machine updates the i-th momentum variable ($y_i$) by the N position variables ($x_1$ to $x_N$), the N coefficients ($J_{i,j}$) representing the interaction between the i-th position variable ($x_i$) in the $N \times N$ matrices (J) and the other (N-1) position variables ($x_{1 \text{ to } i-1}$, $x_{i+1 \text{ to } N}$), and the i-th bias coefficient ($h_i$).

Subsequently, in S15, the simulated bifurcation machine executes an x update process of updating each of the N

position variables ($x_1$ to $x_N$). The simulated bifurcation machine updates the i-th position variable ($x_i$) by the i-th momentum variable ($y_i$) in the update process of the i-th position variable ($x_i$) in the x update processing.

Note that the simulated bifurcation machine may execute the process of S14 and the process of S 15 in an order changed.

Subsequently, in S16, the simulated bifurcation machine executes a wall process on the position variable whose absolute value exceeds one among the N position variables ($x_1$ to $x_N$). Moreover, the simulated bifurcation machine also executes a wall process on the momentum variable corresponding to the position variable whose absolute value exceeds one. For example, in the wall process, the simulated bifurcation machine changes a value of the position variable whose absolute value exceeds one to a value whose absolute value is one or smaller than one in a state where the signs are the same. Moreover, for example, the simulated bifurcation machine changes a value of the momentum variable corresponding to the position variable whose absolute value exceeds one to zero in the wall processing.

The simulated bifurcation algorithm has variations in operations of the x update processing, the y update processing, and the wall processing. For example, variations of the simulated bifurcation algorithm include an adiabatic simulated bifurcation (aSB) algorithm, a ballistic simulated bifurcation (bSB) algorithm, and a discrete simulated bifurcation (dSB) algorithm.

In a case where the processing according to the adiabatic simulated bifurcation algorithm is executed, the simulated bifurcation machine executes an operation represented by Expression (4-1) in the y update processing (S14) and executes an operation represented by Expression (4-2) in the x update processing (S15). Note that, in a case where the processing according to the adiabatic simulated bifurcation algorithm is executed, the simulated bifurcation machine does not execute the wall process (S15).

$$y_i(t_{k+1}) = y_i(t_k)$$
$$+ \left\{ -Kx_i^3(t_k) - [a_0 - a(t_k)]x_i(t_k) - \eta h_i \right.$$
$$\left. + c_0 \sum_{j=1}^{N} J_{i,j}\, x_j(t_k) \right\} \Delta_t \qquad \cdots (4\text{-}1)$$

$$x_i(t_{k+1}) = x_i(t_k) + a_0 y_i(t_{k+1})\Delta_t \qquad \cdots (4\text{-}2)$$

In a case where the processing according to the ballistic simulated bifurcation algorithm is executed, the simulated bifurcation machine executes an operation represented by Expression (5-1) in the y update processing (S14), executes an operation represented by Expression (5-2) in the x update processing (S15), and executes an operation represented by Expression (5-3) in the wall processing (S16).

$$y_i(t_{k+1}) = y_i(t_k)$$
$$+ \left\{ -[a_0 - a(t_k)]x_i(t_k) - \eta h_i + c_0 \sum_{j=1}^{N} J_{i,j}\, x_j(t_k) \right\} \Delta_t \qquad \cdots (5\text{-}1)$$

$$x_i(t_{k+1}) = x_i(t_k) + a_0 y_i(t_{k+1})\Delta_t \qquad \cdots (5\text{-}2)$$

$$\text{if } |x_i(t_{k+1})| > 1, \text{ set } x_i(t_{k+1}) = \text{sgn}\big(x_i(t_{k+1})\big) \text{ and } y_i(t_{k+1}) = 0 \qquad \cdots (5\text{-}3)$$

In a case where the processing according to the discrete simulated bifurcation algorithm is executed, the simulated bifurcation machine executes an operation represented by Expression (6-1) in the y update processing (S14), executes an operation represented by Expression (6-2) in the x update processing (S15), and executes an operation represented by Expression (6-3) in the wall processing (S16).

$$y_i(t_{k+1}) = y_i(t_k)$$

$$+ \left\{ -[a_0 - a(t_k)]x_i(t_k) - \eta h_i \right.$$

$$\left. + c_0 \sum_{j=1}^{N} J_{i,j} \text{sgn}[x_i(t_k)] \right\} \Delta_t \qquad \cdots (6\text{-}1)$$

$$x_i(t_{k+1}) = x_i(t_k) + a_0 y_i(t_{k+1}) \Delta_t \qquad \cdots (6\text{-}2)$$

$$\text{if } |x_i(t_{k+1})| > 1, \text{ set } x_i(t_{k+1}) = \text{sgn}(x_i(t_{k+1})) \text{ and } y_i(t_{k+1}) = 0 \qquad \cdots (6\text{-}3)$$

In Expressions (4-1), (4-2), (5-1), (5-2), (5-3), (6-1), (6-2), and (6-3), each of $t_k$ and $t_{k+1}$ represent a time. $t_{k+1}$ is a time obtained by adding a unit time ($\Delta t$) to $t_k$.

$x_i(t_k)$ indicates a value of the i-th position variable ($x_i$) at the time ($t_k$). $x_i(t_{k+1})$ indicates a value of the i-th position variable ($x_i$) at the time ($t_{k+1}$). $y_i(t_k)$ indicates a value of the i-th momentum variable ($y_i$) at the time ($t_k$). $y_i(t_{k+1})$ indicates a value of the i-th momentum variable ($y_i$) at the time ($t_{k+1}$).

K, $a_0$, $\eta$, and $c_0$ are predetermined constants. $a(t_k)$ is a function that changes according to a time. $a(t_k)$, where, for example, $a(t_1) = 0$, is a positive real number that increases as the time increases, and is a function that is ao at the end time (T) ($a(T) = a_0$). Moreover, $\text{sgn}(x_i(t_k))$ is a function that outputs the sign of the i-th position variable ($x_i$) at the time ($t_k$), and is +1 when $x_i(t_k)$ is zero or more and -1 when $x_i(t_k)$ is less than zero.

In a case where the process of S 14 to S 16 are executed a predetermined number of times, namely, in a case where the operation is executed until time t reaches final time T, the simulated bifurcation machine exits the loop processing between S13 and S 17 and advances the process to S18.

In S18, the simulated bifurcation machine outputs N position variables ($x_1$ to $x_N$) at the final time or N decision variables ($s_1$ to $s_N$) calculated based on the N position variables ($x_1$ to $x_N$) at the final time. The simulated bifurcation machine calculates the i-th decision variable ($s_i$) among the N decision variables ($s_1$ to $s_N$) based on $\text{sgn}(x_i)$.

When the process of S18 ends, the simulated bifurcation machine ends the process according to the simulated bifurcation algorithm.

Note that the number of repetitions of the time evolution processing (loop processing between S13 and S17) is determined in advance in accordance with the application. The calculation amount necessary for one cycle of processing (one cycle of S14 to S16) in the time evolution process does not change. Therefore, the simulated bifurcation machine can reduce the fluctuation in the solving time. Therefore, even when the simulated bifurcation machine is applied to a real-time system having a time constraint that the processing is required to be completed by a predetermined time, the solution can be reliably output by the predetermined time.

Moreover, for example, as disclosed in JP 2021-060864 A, the simulated bifurcation machine can be configured using a dedicated parallel processing circuit including a large number of arithmetic units. As a result, the simulated bifurcation machine can extremely shorten the calculation time for one cycle of processing in the time evolution process. In addition, unlike the case of software processing, in a simulated bifurcation machine mounted on a dedicated hardware circuit, any interrupt processing does not occur, so that the solving time is strictly fixed. For example, a simulated bifurcation machine mounted on a dedicated hardware circuit can fix the time until a solution is obtained in units of clock cycles. Therefore, in a case where the simulated bifurcation machine mounted on a dedicated hardware circuit is applied to a real-time system, it is possible to output a solution while more reliably protecting a time constraint.

FIG. 4 is a diagram illustrating a configuration of an information processing system including an Ising machine and a host device. An information processing system having a function of solving a combination optimization problem can be configured by, for example, an Ising machine and a host device. The host device executes a process other than a process executed by the Ising machine. In this case, the Ising machine is introduced for the purpose of reducing the solving time of the combination optimization problem and is considered as an accelerator or an off-loader. The host device includes a general-purpose processor, an off-loader other than an Ising machine, a memory, a storage, a sensor, an actuator, a communication unit interface, and the like.

The host device provides the Ising machine with at least information identifying the QUBO problem (matrix (Q)) or information identifying the Ising problem (matrix (J) and bias coefficient array (h)). The Ising machine may acquire information identifying the QUBO problem (matrix (Q)) and convert it into information identifying the Ising problem (matrix (J) and bias coefficient array (h)). Then, after the optimization processing, the Ising machine returns arrangement information ($s^{opt}$) representing N decision variables ($s_1$ to $s_N$) as a solution to the host device.

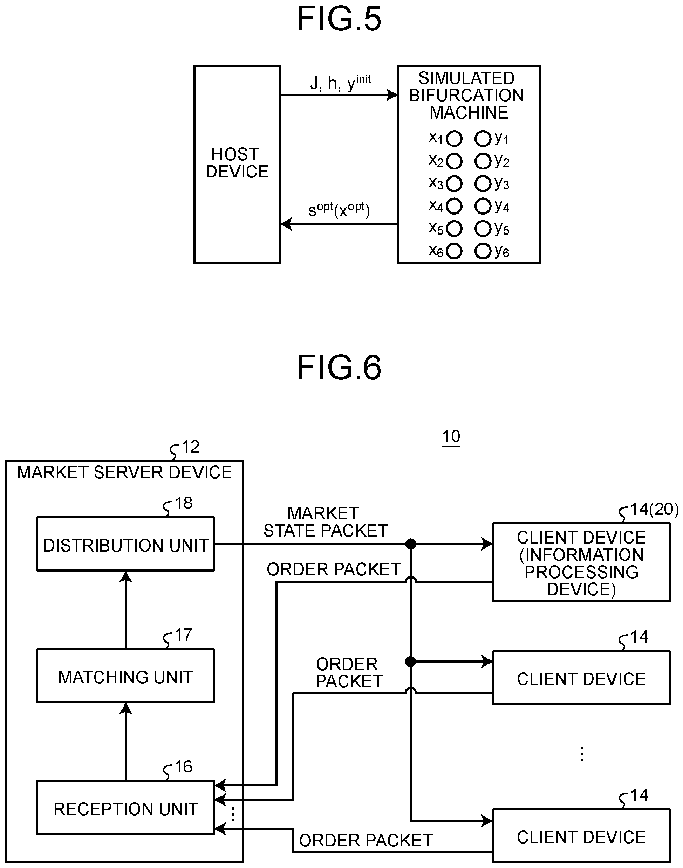

FIG. 5 is a diagram illustrating a configuration of an information processing system including a simulated bifurcation machine and a host device.

An information processing system having a function of solving a combination optimization problem may include a simulated bifurcation machine as an Ising machine. In this case, the host device provides the simulated bifurcation machine with information (matrix (J) and bias coefficient (h)) for identifying the Ising problem. Further, the host device may provide the simulated bifurcation machine with initial values of the N position variables ($x_1$ to $x_N$) and initial values of the N momentum variables ($y_1$ to $y_N$). In addition, the host device may provide the simulated bifurcation machine with various constants, functions (for example, K, ao, co, a(t) and $\Delta t$), and the like used in the simulated bifurcation algorithm. After the optimization processing, the simulated bifurcation machine may return, as a solution, the arrangement information ($x^{opt}$) representing N position variables ($x_1$ to $x_N$) to the host device, instead of the arrangement information ($s^{opt}$) representing N decision variables ($s_1$ to $s_N$).

First Embodiment

Next, a market system 10 according to the first embodiment will be described.

FIG. 6 is a diagram illustrating a configuration of the market system 10. The market system 10 executes electronic transactions of a plurality of targets by a plurality of participants. More specifically, the market system 10 receives a buy order and a sell order from each of the participants for each target, matches the price and the quantity of the received buy order with the price and the quantity of the sell order, and electronically establishes a transaction.

In the present embodiment, the market system 10 executes a trade transaction of a plurality of stocks (a plurality of names of stocks) as electronic transactions of a plurality of targets. Note that the target is not limited to stocks as long as it can be traded in the market, and may be securities such as bonds, stock investment trusts, real estate investment trusts, and futures thereof, financial products such as foreign exchange, interest rates, and interest rate futures, products such as gold, crude oil, and grains, and product futures thereof.

The market system 10 includes a market server device 12 and a plurality of client devices 14.

The market server device 12 is a computer used by a market manager. The market server device 12 is connected to a plurality of client devices 14 via a network.

Each of the client devices 14 is a device used by participants in the market. Each of the client devices 14 is implemented by, for example, a computer.

Each of the client devices 14 determines which stock among the stocks to trade. Each of the client devices 14 generates an order packet including transaction information about the stock determined to be traded among the stocks to transmit the order packet to the market server device 12. The order packet includes, as transaction information, for example, identification information for identifying a stock to be traded among a plurality of stocks, a trade direction representing a sell order or a buy order for the stock identified by the identification information, a price (namely, the stock price), and a quantity (namely, the number of stocks). Note that the price is not limited to a specific value, and may be, for example, a value at the time of establishment of trade after the start of the market, or a value having a constant width.

The market server device 12 executes transactions of a plurality of stocks. The market server device 12 includes a reception unit 16, a matching unit 17, and a distribution unit 18.

The reception unit 16 receives an order packet transmitted from each of the client devices 14. The reception unit 16 provides the information about the received order packet to the matching unit 17.

The matching unit 17 performs matching between the price and the quantity of the sell order and the price and the quantity of the buy order for each of the stocks, and establishes a transaction between the sell order and the buy order in which the price and the quantity match in order of reception. The matching unit 17 provides the distribution unit 18 with information about an order for which a transaction has been established and information about an order for which a transaction has not been established.

Based on the information acquired from the matching unit 17, the distribution unit 18 simultaneously distributes the market state packet including the information indicating the stock transaction status to the plurality of client devices 14. For example, the market state packet is generated for each of the stocks. The market state packet includes identification information for identifying stocks, and a transaction price that is the latest price at which a transaction has been established for the stocks identified by the identification information.

In addition, the market state packet may include indication information for each of the stocks. The indication information is information indicating the price and the quantity of the buy order for which the transaction is not established and information indicating the price and the quantity of the sell order for which the transaction is not established for each of the stocks.

The distribution unit 18 irregularly distributes the market state packet. For example, when the transaction is established, the distribution unit 18 distributes the market state packet for the stock for which the transaction is established. For example, each of the client devices 14 acquires a market state packet irregularly distributed, and determines which stock among the stocks to trade based on information included in the acquired market state packet. Then, each of the client devices 14 generates an order packet for the determined stock to transmit the order packet to the market server device 12.

An information processing device 20 according to the present embodiment functions as the client device 14 in the market system 10. The information processing device 20 may be implemented by a computer including a processor, a memory, and the like, or may have a configuration including a dedicated hardware circuit in addition to the processor, the memory, and the like.

Here, the information processing device 20 generates a combination optimization problem based on market state packets acquired irregularly, solves the generated combination optimization problem, and determines whether to trade for each of the stocks based on a solution of the combination optimization problem obtained by the solving.

In the present embodiment, the information processing device 20 uses the function shown in Expression (7) as the cost function in the combination optimization problem.

$$Cost = \sum_{i=1}^{N} \left\{ \left( \alpha - \left| \frac{p_i(t)}{p_i(0)} - 1 \right| \right) * b_i \right\}$$

$$+ \beta \sum_{i=1}^{N} \sum_{j=1}^{N} \left\{ (-1) * \left| \left( \frac{p_i(t)}{p_i(0)} - 1 \right) - \left( \frac{p_j(t)}{p_j(0)} - 1 \right) \right| * b_i * b_j \right\} \quad \cdots (7)$$

In Expression (7), N is an integer of two or more, and represents the number of issues of a plurality of stocks traded in the market server device 12. i and j are integers of one or more and N or less, and are indexes for identifying each of the stocks.

The cost function of Expression (7) includes N decision variables. $b_i$ is a binary of 0 or 1, and is a decision variable indicating whether to trade the i-th stock among the stocks. $b_j$ is a binary value of 0 or 1, and is a decision variable indicating whether to trade the j-th stock among the stocks. In the present embodiment, $b_i$ and $b_j$ represent 1 in a case where transaction is performed and 0 in a case where transaction is not performed.

t represents an optional time between the transaction start time and the transaction end time in one day. t is 0 at the transaction start time, and increases as time passes from the transaction start time. In the present embodiment, t is an integer and represents time by indexing.

$p_i(t)$ is a transaction price at time t in the i-th stock, namely, a stock price at time t. $p_i(0)$ is the transaction price of the i-th stock at the transaction start time, namely, a stock price at the transaction start time. $\alpha$ and $\beta$ are preset constants.

$p_i(t)/p_i(0) -1$ represents a rate of change based on the transaction price at the transaction start time. In a case where $p_i(t)/p_i(0) -1$ is greater than 0, it indicates that the price of the i-th stock is rising, and in a case where it is less than 0, it indicates that the price of the i-th stock is falling.

The first term on the right side of the cost function of Expression (7) is a term for evaluating the difference between the rate of change in each of the stocks and the preset $\alpha$. Therefore, the cost function of Expression (7) decreases in a case of trading stocks with a rate of change greater than $\alpha$.

The second term on the right side of the cost function of Expression (7) is a term for evaluating the absolute value of the difference between the rate of change in the i-th stock and the rate of change in the j-th stock among the stocks. Therefore, the cost function of Expression (7) decreases in a case where a set of two stocks in which the absolute value of the difference between the rates of change is large, namely, correlation of the rates of change is small is traded.

From the above, the combination optimization problem that minimizes the cost function of Expression (7) can obtain a solution in which risk dispersion is performed so as to trade stocks having a low correlation while trading stocks having a high rate of change.

The information processing device 20 acquires a solution of the combination optimization problem that minimizes such a cost function, namely, the values of the N decision variables. The information processing device 20 determines to trade the stock corresponding to the decision variable having a value of 1 among the N decision variables. Then, the information processing device 20 generates an order packet including transaction information about the stock determined to execute transaction among the stocks to transmit the order packet to the market server device 12.

In addition, the information processing device 20 determines a trade direction for the i-th stock, namely, whether to place a sell order or a buy order, based on the rate of change. For example, in a case of placing a buy order in the case of a rising trend, namely, in a case of market follower, the information processing device 20 places a buy order in a case where the rate of change is positive, and places a sell order in a case where the rate of change is negative. On the other hand, for example, in a case of placing a sell order in a case of an upward trend, namely, in a case of contrarian, the information processing device 20 places a sell order in a case where the rate of change in the rate of change is positive, and places a buy order in a case where the rate of change in the rate of change is negative. In the present embodiment, the information processing device 20 places a sell order in a case where the rate of change is positive, and places a buy order in a case where the rate of change is negative.

Note that the information processing device 20 may solve a combination optimization problem that minimizes a cost function other than the cost function shown in Expression (7).

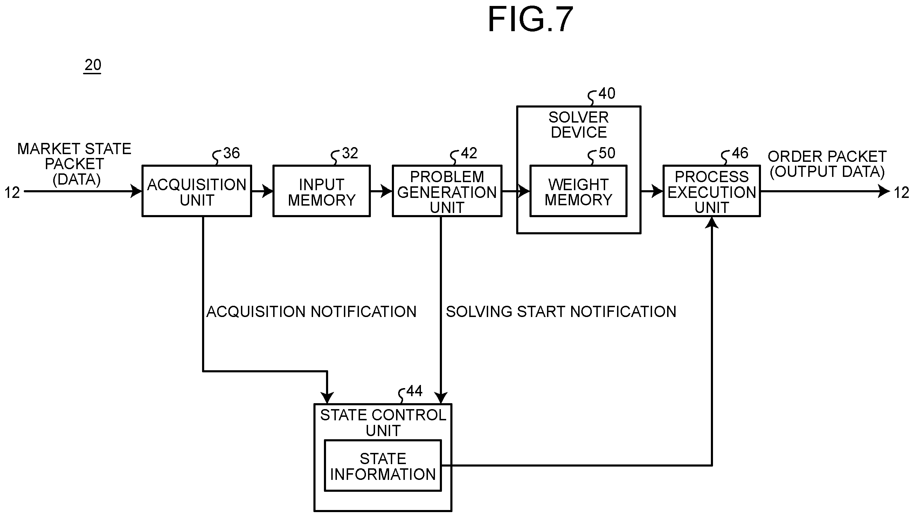

FIG. 7 is a diagram illustrating a configuration of the information processing device 20 according to the first embodiment.

The information processing device 20 acquires data given irregularly and generates a combination optimization problem based on the acquired data. The information processing device 20 generates output data based on a solution of the generated combination optimization problem. Then, the information processing device 20 outputs the generated output data to a first device different from the information processing device 20. In the present embodiment, the information processing device 20 receives a market state packet irregularly provided from the market server device 12 as data. The information processing device 20 generates a combination optimization problem based on the received market state packet, and generates an order packet as output data based on a solution to the generated combination optimization problem. In the present embodiment, the information processing device 20 transmits the generated order packet to the market server device 12 which is an example of the first device.

The information processing device 20 includes an input memory 32, an acquisition unit 36, a solver device 40, a problem generation unit 42, a state control unit 44, and a process execution unit 46.

The input memory 32 stores a plurality of input values on which a plurality of weight values included in the cost function of the combination optimization problem is based. In the present embodiment, the input memory 32 stores values corresponding to a plurality of transaction prices as a plurality of input values. The values corresponding to the plurality of transaction prices stored in the input memory 32 correspond to the plurality of stocks on a one-to-one basis. The input memory 32 stores a value corresponding to the transaction price for each of the stocks. In the present embodiment, the information processing device 20 trades N stocks. Therefore, the input memory 32 stores N input values as a plurality of input values. In addition, an n-th input value, where n is an integer of one or more and N or less, among the N input values corresponds to an n-th target among the N stocks. The value corresponding to the transaction price may be the transaction price or a value obtained by performing predetermined processing or calculation on the transaction price. For example, the value according to the transaction price may be a rate of change representing a ratio of the latest transaction price to the transaction price at the transaction start time.

The acquisition unit 36 acquires data irregularly and repeatedly provided. The data acquired by the acquisition unit 36 includes input information about at least one target among the plurality of targets. In a case of acquiring the data, the acquisition unit 36 rewrites the input value corresponding to the target related to the input information included in the acquired data among the input values stored in the input memory 32 based on the input information included in the acquired data.

In the present embodiment, the acquisition unit 36 acquires a market state packet, which is an example of data repeatedly given irregularly, from the market server device 12. The market state packet includes a transaction price of at least one stock among the N stocks as input information. Then, in a case of acquiring the market state packet, the acquisition unit 36 rewrites a value corresponding to the transaction price for the stock indicated in the acquired market state packet among the values corresponding to the transaction prices for each of the N stocks stored in the input memory 32 based on the transaction price included in the acquired market state packet. Specifically, in a case of acquiring the market state packet including the transaction price of the n-th stock, the acquisition unit 36 rewrites the value corresponding to the n-th transaction price stored in the input memory 32 based on the transaction price of the n-th stock.

Moreover, in a case of acquiring the market state packet, the acquisition unit 36 gives an acquisition notification indicating that the market state packet has been acquired to the state control unit 44.

The solver device 40 receives the combination optimization problem from the problem generation unit 42 and solves the received combination optimization problem. Then, the solver device 40 outputs a solution of the received combination optimization problem. In the present embodiment, the solver device 40 is a simulated bifurcation machine that is one of the Ising machines, and is implemented in a dedicated hardware circuit. Moreover, in the present embodiment, the solver device 40 includes a weight memory 50 that stores a plurality of weight values included in the cost function of the combination optimization problem. For example, the weight memory 50 stores a matrix (J) representing a plurality of weight values included in the cost function shown in Expression (7) and a bias coefficient array (h).

Note that the solver device 40 may solve the combination optimization problem based on another algorithm instead of the simulated bifurcation machine. Moreover, the solver device 40 may solve a combination optimization problem by a processor executing a program, instead of by a dedicated hardware circuit, may be a server device, on a network, that solves a combination optimization problem, or may be a device including a host device and an Ising machine.

The problem generation unit 42 generates a combination optimization problem based on the data acquired by the acquisition unit 36, and causes the solver device 40 to solve the generated combination optimization problem. More specifically, the problem generation unit 42 generates a combination optimization problem based on a plurality of input values stored in the input memory 32, and causes the solver device 40 to solve the generated combination optimization problem.

The problem generation unit 42 gives the generated combination optimization problem to the solver device 40 in a format that can be received by the solver device 40. For example, the problem generation unit 42 generates a plurality of weight values included in the cost function of the combination optimization problem, and gives the plurality of generated weight values to the solver device 40. For example, in a case where the solver device 40 is an Ising machine and the combination optimization problem is an Ising problem, the problem generation unit 42 generates a matrix (J) and a bias coefficient array (h) and gives the generated matrix (J) and bias coefficient array (h) to the solver device 40. For example, in a case where the solver device 40 receives a mathematical expression representing a cost function, the problem generation unit 42 may generate a cost function based on a value corresponding to the transaction price of N stocks stored in the input memory 32, and give the generated cost function to the solver device 40. Moreover, in a case where the solver device 40 can receive the constraint condition together with the cost function, the problem generation unit 42 may generate information representing the cost function and the constraint condition and give the information to the solver device 40.

In the present embodiment, the problem generation unit 42 generates a combination optimization problem that minimizes the cost function shown in Expression (7). Then, in the present embodiment, the problem generation unit 42 generates a plurality of weight values included in the cost function of the combination optimization problem shown in Expression (7) based on the plurality of input values stored in the input memory 32, and writes the plurality of generated weight values into the weight memory 50. More specifically, the problem generation unit 42 generates the matrix (J) and the bias coefficient array (h) obtained by Expression (7) based on the values corresponding to the transaction prices of the N stocks stored in the input memory 32, and writes the generated matrix (J) and bias coefficient array (h) into the weight memory 50.

Moreover, the problem generation unit 42 generates a combination optimization problem in response to acquiring data or in a preset cycle, and causes the solver device 40 to solve the combination optimization problem. In the present embodiment, the problem generation unit 42 generates the combination optimization problem in response to the acquisition unit 36 acquiring the market state packet or at a preset cycle, and causes the solver device 40 to solve the combination optimization problem.

However, the problem generation unit 42 does not generate a new combination optimization problem even if the acquisition unit 36 acquires a new market state packet during the solving process period from the start of the generation of the combination optimization problem to the output of the solution of the generated combination optimization problem. In addition, the preset cycle is longer than the time required from the start of the generation of the combination optimization problem to the output of the solution of the generated combination optimization problem. In addition, the preset cycle may not be every constant time, and may vary with time. The preset cycle may be performed once in a predetermined time. For example, the problem generation unit 42 may set a predetermined time in a predetermined time unit such as second, minute, hour, day, week, month, or year as a preset cycle, generate a combination optimization problem once, and cause the solver device 40 to solve the combination optimization problem.

Moreover, in a case where the generation of the combination optimization problem is started, the problem generation unit 42 gives a solving start notification indicating that the generation of the combination optimization problem is started to the state control unit 44.

The state control unit 44 stores state information indicating a clean state (first state) or a dirty state (second state). The state information is, for example, a state machine. Further, the state information may be, for example, a 1-bit flag.

The state control unit 44 acquires the solving start notification from the problem generation unit 42. The state control unit 44 seta the state information to a clean state in response to receiving the solving start notification from the problem generation unit 42. The state control unit 44 sets the state information to a clean state in response to the problem generation unit 42 starting generation of the combination optimization problem.

In addition, the state control unit 44 acquires the acquisition notification from the acquisition unit 36. The state control unit 44 sets the state information to the dirty state in response to receiving the acquisition notification from the acquisition unit 36. The state control unit 44 sets the state information to the dirty state in response to the acquisition unit 36 acquiring the market state packet.

Such state information is in a clean state in a case where the acquisition unit 36 does not acquire a new market state packet during the solving process period from the start of the generation of the combination optimization problem to the output of the solution of the generated combination optimization problem. Therefore, in a case where the state information is in the clean state, the solution solved by the solver device 40 is a solution reflecting the latest market state packet and means a clean solution.

On the other hand, the state information is in the dirty state in a case where the acquisition unit 36 acquires a new market state packet during the solving process from the start of the generation of the combination optimization problem to the output of the solution of the generated combination optimization problem. Therefore, in a case where the state information is the dirty state, the solution solved by the solver device 40 is a solution that does not reflect the latest market state packet, and means a dirty solution.

The process execution unit 46 acquires a solution of the combination optimization problem from the solver device 40. In the present embodiment, the cost function includes N decision variables. The n-th decision variable among the N decision variables indicates whether a predetermined operation is performed on the n-th stock among the N stocks. For example, the n-th decision variable represents whether to trade the n-th stock among the N stocks. For example, the process execution unit 46 acquires the values (0 or 1) of the plurality of decision variables ($b_1$ to $b_N$) included in Expression (7) as a solution. The process execution unit 46 executes a process based on the acquired solution in response to acquiring the solution from the solver device 40.

Moreover, in a case where the solution of the combination optimization problem is acquired from the solver device 40, the process execution unit 46 acquires the state information stored in the state control unit 44, and changes a process based on the solution according to the state information. For example, in a case where the state information is in the clean state, the process execution unit 46 executes a first process in response to acquiring the solution from the solver device 40 based on the acquired solution. Moreover, in a case where the state information is in the dirty state, the process execution unit 46 executes a second process different from the first process in response to acquiring a solution from the solver device 40.

In a case where the solution of the combination optimization problem is acquired from the solver device 40, the process execution unit 46 generates output data including output information indicating that a predetermined operation is performed on at least one stock identified by the solution among the N stocks based on the acquired solution. Then, in a case where the state information is in the clean state, the process execution unit 46 outputs the output data to the first device, and stops outputting the output data to the first device in the dirty state.

In the present embodiment, in a case of acquiring the solution of the combination optimization problem from the solver device 40, the process execution unit 46 generates an order packet that is an example of output data. The order packet includes, as the output information, transaction information indicating that a buy order or a sell order, which is a predetermined operation, is to be placed for the stock corresponding to the decision variable having the value (1) indicating that the transaction is to be performed among the values of the plurality of decision variables ($b_1$ to $b_N$). In a case where the state information is the clean state, the process execution unit 46 outputs the generated order packet to the market server device 12 which is an example of the first device. In a case where the state information is in the dirty state, the process execution unit 46 stops outputting the generated order packet to the market server device 12.

As a result, the process execution unit 46 can output the order packet to the market server device 12 in a case of acquiring a solution reflecting the latest market state packet, namely, a clean solution. In addition, the process execution unit 46 can stop outputting the order packet to the market server device 12 in a case of acquiring a solution that does not reflect the latest market state packet, namely, a dirty solution.

Note that the process execution unit 46 may perform a process of stopping outputting the order packet based on other information together with the state information. For example, the process execution unit 46 may stop outputting the order packet based on an index (Status of volume, sate of special indication and the like, ADR, etc.) other than the price of the stock. Moreover, in a case where the market system 10 trades a target other than stocks, the output of the output data may be stopped based on another index. For example, in a case where the market system 10 trades exchange, bonds, or the like, or products such as gold, crude oil, and grain, the process execution unit 46 may stop outputting the output data based on, for example, another important index (for example, crude oil price).

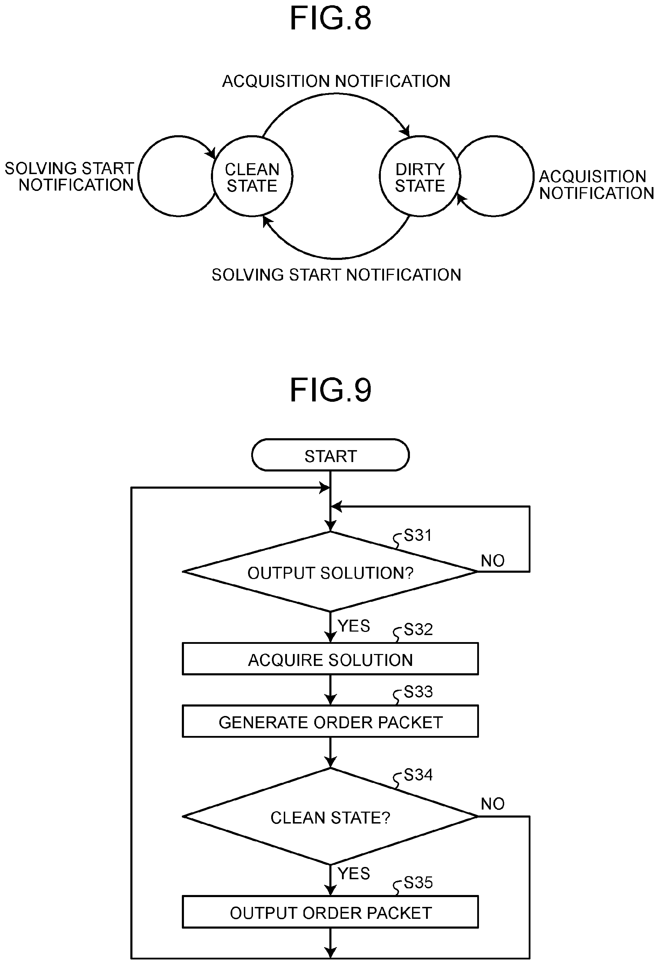

FIG. 8 is a transition diagram of state information. In a case of implemented by a state machine, the state information transitions between a clean state and a dirty state. The state information transitions to the dirty state in a case where the acquisition notification is given in the clean state. The state information maintains the dirty state in a case where the acquisition notification is given in the dirty state. The state information transitions to the clean state in a case where a solving start notification is given in the dirty state. The state information maintains a clean state in a case where a solving start notification is given in the clean state.

FIG. 9 is a flowchart illustrating a procedure of a process of the process execution unit 46 according to the first embodiment. The process execution unit 46 executes the process in the procedure illustrated in FIG. 9.

First, in S31, the process execution unit 46 determines whether a solution has been output from the solver device 40. In a case where no solution is output from the solver device 40 (No in S31), the process execution unit 46 waits for the process in S31. In a case where the solution is output from the solver device 40 (Yes in S31), the process execution unit 46 advances the process to S32.

In S32, the process execution unit 46 acquires the solution output from the solver device 40. Subsequently, in S33, the process execution unit 46 generates an order packet based on the acquired solution.

Subsequently, in S34, the process execution unit 46 determines whether the state information stored in the state control unit 44 is in a clean state. In a case where the state information is not in the clean state (No in S34), namely, in a case where the state information is in the dirty state, the process execution unit 46 skips the process in S35 and returns the process to S31. In a case where the state information is the clean state (Yes in S34), the process execution unit 46 advances the process to S35.

In S35, the process execution unit 46 transmits the order packet to the market server device 12. When the process of S35 is completed, the process execution unit 46 returns the process to S31 and repeats the process from S31.

By executing the processing in such a procedure, the process execution unit 46 can output the order packet to the market server device 12 in a case where the state information is in the clean state, and can stop outputting the order packet to the market server device 12 in a case where the state information is in the dirty state.

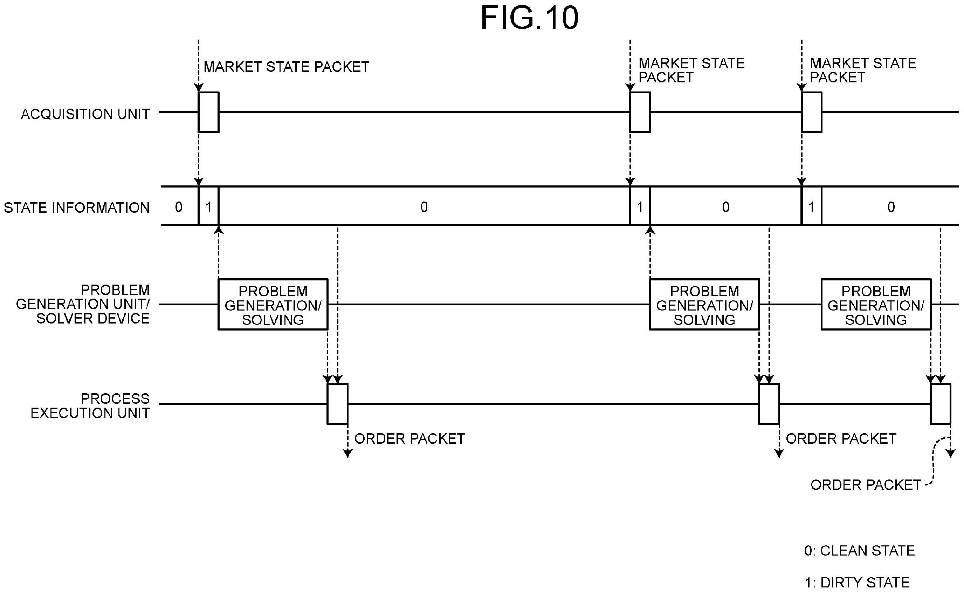

FIG. 10 is a timing chart illustrating a first example of the processing timing of the information processing device 20.

The state information transitions to a dirty state (in the case of FIG. 10, 1) at a timing when the acquisition unit 36 acquires the market state packet. Moreover, the state information transitions to a clean state (0 in the case of FIG. 10) at a timing when the problem generation unit 42 starts generating the combination optimization problem. Then, the process execution unit 46 outputs the order packet on condition that the state information is in the clean state (0) at the timing when the solver device 40 outputs the solution.

As an example, the information processing device 20 generates a combination optimization problem in response to acquiring the market state packet. Since the market state packet is irregularly given from the market server device 12, in this case, the information processing device 20 irregularly generates the combination optimization problem.

Moreover, in a case where the generation time of the combination optimization problem and the calculation time in the solver device 40 are constant, the time from when the market state packet is acquired to when the order packet is output is constant. Therefore, in this case, the information processing device 20 outputs the order packet after a given period of time from the timing of acquiring the market state packet.

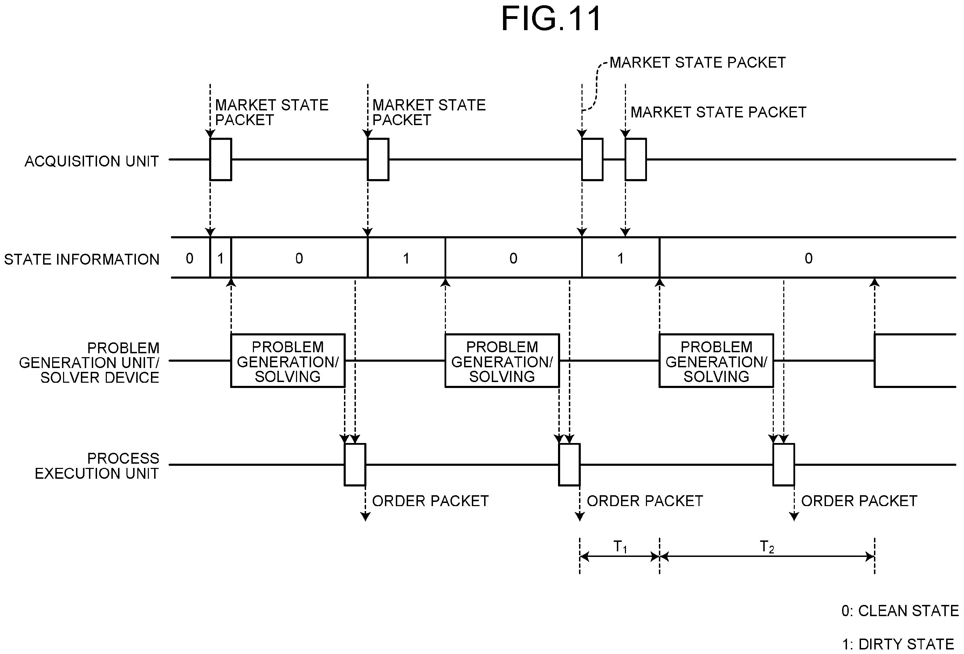

FIG. 11 is a timing chart illustrating a second example of the processing timing of the information processing device 20. As an example, the information processing device 20 may generate a combination optimization problem with a preset cycle. In this case, the information processing device 20 outputs the order packet at regular time intervals.

In addition, in a case where the combination optimization problem is generated at a preset cycle, there is a possibility that the acquisition unit 36 acquires two or more market state packets during a period from the output of the immediately preceding order packet to the start of generation of the next combination optimization problem (for example, period $T_1$ in FIG. 11). In this case, the information processing device 20 generates a combination optimization problem reflecting two or more market state packets acquired in this period, and causes the solver device 40 to solve the generated combination optimization problem.

Moreover, in a case where the combination optimization problem is generated at a preset cycle, there is a possibility that the acquisition unit 36 does not acquire the market state packet during a period (for example, period $T_2$ in FIG. 11) from the start of generation of the immediately preceding combination optimization problem to the start of generation of the next combination optimization problem. In this case, the immediately preceding combination optimization problem and the next combination optimization problem are the same.

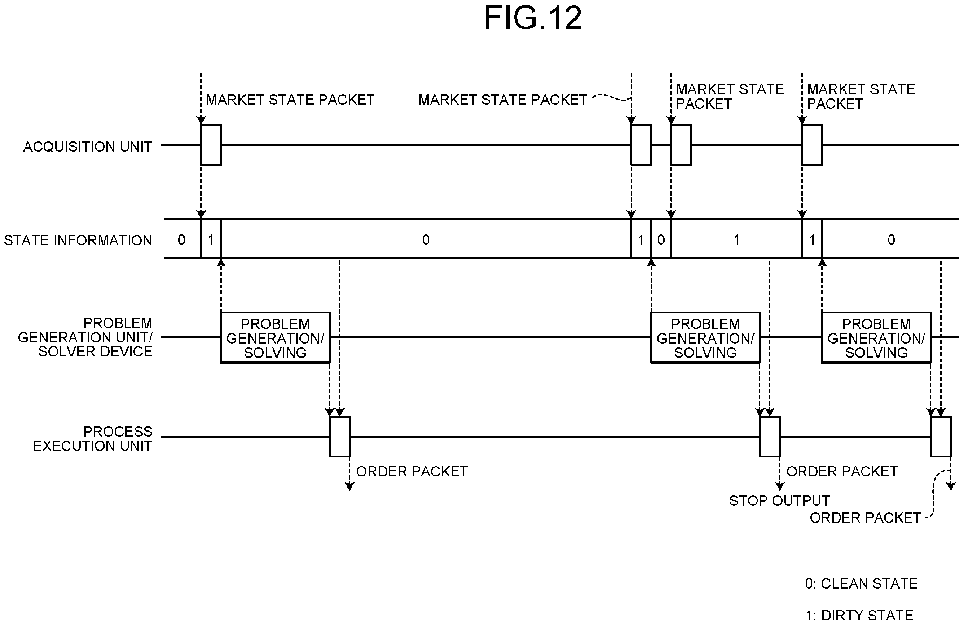

FIG. 12 is a timing chart illustrating a third example of the processing timing of the information processing device 20. The market server device 12 irregularly and repeatedly distributes the market state packet. Therefore, in both the case of generating the combination optimization problem in response to acquiring the market state packet and the case of generating the combination optimization problem at a preset cycle, the information processing device 20 may acquire a next new market state packet from between the acquisition of the market state packet and the output of the order packet.

In a case where a next new market state packet is acquired between the acquisition of the market state packet and the output of the order packet, the solution of the combination optimization problem is a solution that does not reflect the latest market state packet. In a case where outputting the order packet based on the solution that does not reflect the latest market state packet, the information processing device 20 cannot perform the optimum transaction based on the latest stock transaction price.

In a case of acquiring the market state packet, the information processing device 20 according to the present embodiment shifts the state information from the clean state (0 in the case of FIG. 12) to the dirty state (1 in the case of FIG. 12). Then, in a case of outputting the order packet, the information processing device 20 confirms the state information, to output the order packet in a case where the state information is in a clean state (0 in the case of FIG. 12), and stop outputting the order packet in a case where the state information is in a dirty state (1 in the case of FIG. 12). As a result, the information processing device 20 can stop outputting the order packet in a case where the optimum transaction cannot be performed based on the latest transaction price of the stock.

In this manner, the information processing device 20 according to the present embodiment can change the processing according to whether the generated solution is the solution of the combination optimization problem that reflects the latest data or the solution of the combination problem that does not reflect the latest data in a case where the processing is executed using the combination optimization problem on the data that changes with the lapse of time. As a result, the information processing device 20 according to the present embodiment can prevent inappropriate processing from being executed in a case where processing is executed using the combination optimization problem on data that changes with the lapse of time.

Second Embodiment

Next, a market system 10 according to the second embodiment will be described. Since the market system 10 according to the second embodiment has substantially the same function and configuration as those of the first embodiment, elements having substantially the same function and configuration are denoted by the same reference numerals, and detailed description thereof will be omitted except for differences. The same applies to the third and subsequent embodiments.

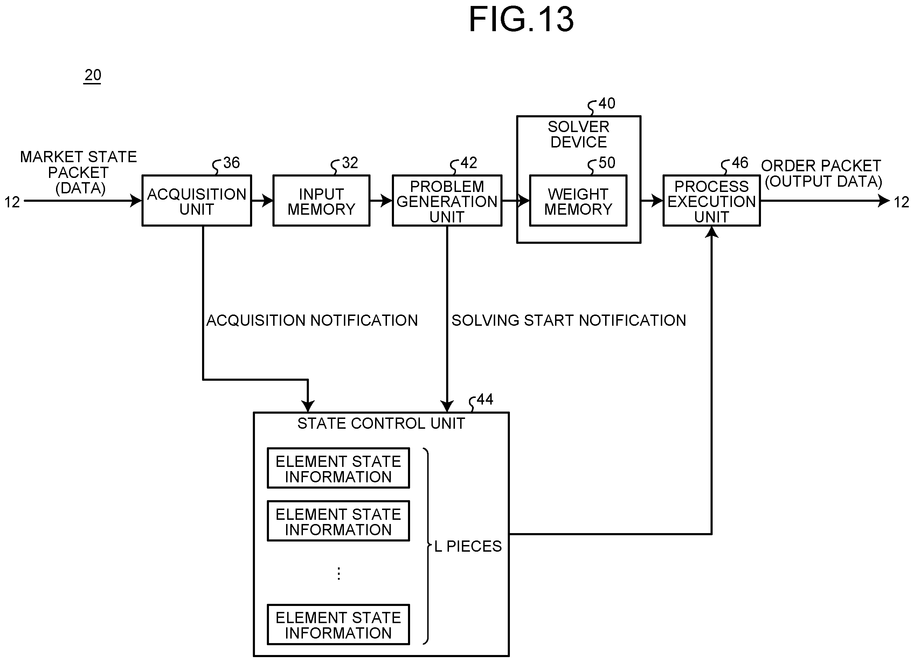

FIG. 13 is a diagram illustrating a configuration of an information processing device 20 according to the second embodiment.

In the present embodiment, the N stocks are classified into L groups. L is an integer of 2 or more and N or less. Which of the L groups each of the N stocks belongs to is preset by the user of the information processing device 20. As an example, each of the L groups is set to include a plurality of stocks having a correlation with a change in the transaction price.

In the present embodiment, the state information includes L pieces of element state information corresponding to the preset L groups on a one-to-one basis. The l-th element state information, where l is an integer of one or more and L or less, among the L pieces of element state information corresponds to the l-th group among the L groups. Each of the L pieces of element state information indicates a clean state or a dirty state. Each of the L pieces of element state information may be a state machine or a 1-bit flag.

The state control unit 44 sets all the L pieces of element state information in a clean state in response to receiving the solving start notification from the problem generation unit 42. The state control unit 44 sets all the L pieces of element state information in a clean state in response to the problem generation unit 42 starting generation of the combination optimization problem.

In response to receiving the acquisition notification from the acquisition unit 36, namely, in response to the acquisition unit 36 acquiring the market state packet, the state control unit 44 identifies a group to which the stock related to the transaction price included in the acquired market state packet belongs among the L groups. Then, the state control unit 44 sets the element state information corresponding to the identified group among the L pieces of element state information to the dirty state. The state control unit 44 sets the l-th element state information to the dirty state in response to acquiring the market state packet including the transaction price of the stock belonging to the l-th group.

In a case where the solution is acquired from the solver device 40, the process execution unit 46 identifies a group to which the stock indicated to be traded by the transaction information included in the order packet generated based on the solution belongs. Then, the process execution unit 46 outputs the order packet to the market server device 12 in a case where the element state information corresponding to the identified group among the L pieces of element state information is in the clean state, and stops outputting the order packet to the market server device 12 in a case where the element state information corresponding to the identified group is in the dirty state. Specifically, in a case where the l-th element state information is in a clean state, the process execution unit 46 outputs an order packet including transaction information indicating that the stocks belonging to the l-th group are traded to the market server device 12. In addition, in a case where the l-th element state information is in the dirty state, the process execution unit 46 stops outputting the order packet including the transaction information indicating that the stocks belonging to the l-th group are traded to the market server device 12.

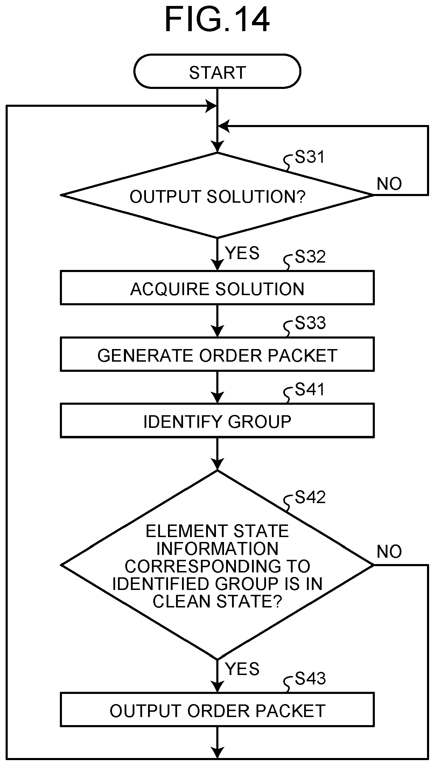

FIG. 14 is a flowchart illustrating a procedure of a process of the process execution unit 46 according to the second embodiment. The process execution unit 46 according to the second embodiment executes the process in the procedure illustrated in FIG. 14.

In S31 to S33, the process execution unit 46 executes a process similar to the process illustrated in FIG. 9.

Following S33, the process execution unit 46 advances the process to S41. In S41, the process execution unit 46 identifies a group to which the stock indicated to be traded by the transaction information included in the order packet belongs among the L groups. Following S41, the process execution unit 46 advances the process to S42.

In S42, the process execution unit 46 determines whether the element state information corresponding to the identified group among the L pieces of element state information stored in the state control unit 44 is in the clean state. In a case where the element state information corresponding to the identified group is not in the clean state (No in S42), the process execution unit 46 skips the process of S43 and returns the process to S31. In a case where the element state information corresponding to the identified group is in the clean state (Yes in S42), the process execution unit 46 advances the process to S43.

In S43, the process execution unit 46 transmits the order packet to the market server device 12. When the process of S43 is completed, the process execution unit 46 returns the process to S31 and repeats the process from S31.

The information processing device 20 according to the second embodiment can stop outputting the order packet in a case where the transaction price of the stock to be traded or the transaction price of another stock belonging to the same group as the stock to be traded changes after the generation of the combination optimization problem starts. Therefore, the information processing device 20 according to the second embodiment can output the order packet even in a case where the transaction price of the stock to be traded or the transaction price of another stock belonging to the same group as the stock to be traded does not change after the generation of the combination optimization problem starts even in a case where the transaction price of the stock belonging to the group different from the stock to be traded changes after the generation of the combination optimization problem starts. As a result, the information processing device 20 according to the second embodiment can prevent an inappropriate process from being executed for the L groups.

Third Embodiment

Next, a market system 10 according to the third embodiment will be described.

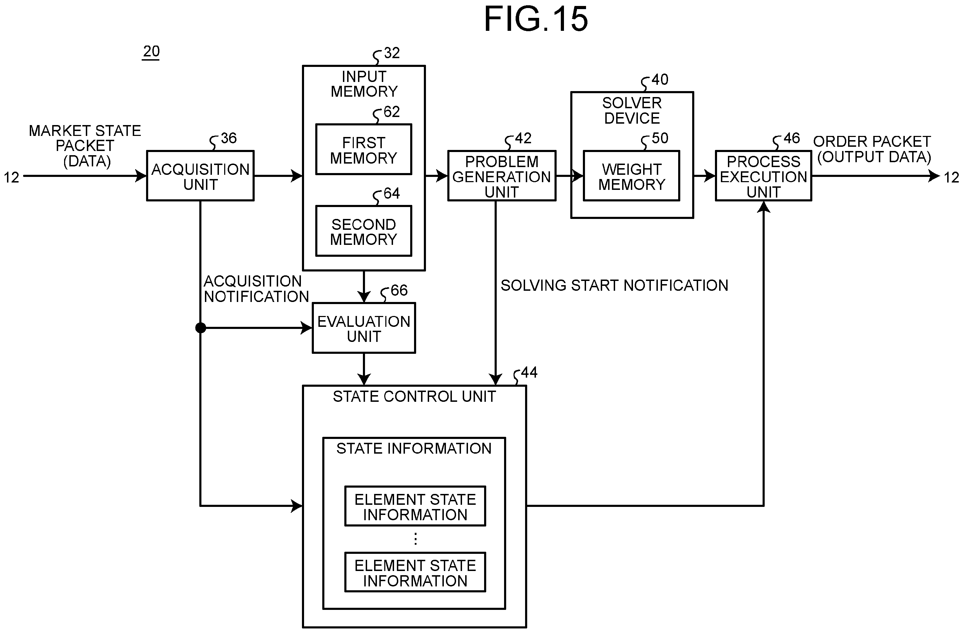

FIG. 15 is a diagram illustrating a configuration of an information processing device 20 according to the third embodiment.

In the third embodiment, the input memory 32 includes a first memory 62 and a second memory 64.

The first memory 62 stores a value corresponding to the latest transaction price for each of the N stocks. For example, every time the market state packet is acquired, the acquisition unit 36 immediately rewrites a value corresponding to the transaction price for the stock indicated in the acquired market state packet among the values corresponding to the transaction prices for the N stocks stored in the first memory 62 based on the latest transaction price included in the acquired latest market state packet.

The second memory 64 stores a value corresponding to the transaction price of each of the N stocks on which the combination optimization problem whose generation has been started last by the problem generation unit 42 is based. The second memory 64 stores a value corresponding to the transaction price of each of the N stocks at the start of generation of the combination optimization problem by the problem generation unit 42.

Even when the acquisition unit 36 acquires a new market state packet, the value corresponding to the transaction price stored in the second memory 64 is not rewritten unless the problem generation unit 42 starts generating the combination optimization problem. For example, in a case of starting to generate a new combination optimization problem, the problem generation unit 42 or the acquisition unit 36 rewrites a value corresponding to the transaction price of each of the N stocks stored in the second memory 64 to a value corresponding to the transaction price of each of the N stocks stored in the first memory 62.

In the third embodiment, the information processing device 20 further includes an evaluation unit 66.

The evaluation unit 66 generates, for each of the N stocks, a comparison result obtained by comparing a value corresponding to the latest transaction price stored in the first memory 62 with a value corresponding to the transaction price on which the combination optimization problem that is stored in the second memory 64 and whose generation has been started last is based. The evaluation unit 66 generates an evaluation value for evaluating the effectiveness of the order packet for each of the N stocks based on the comparison result for each of the N stocks. For example, the evaluation unit 66 generates a comparison result obtained by comparing a value corresponding to the latest transaction price stored in the first memory 62 with a value corresponding to the transaction price on which the combination optimization problem that is stored in the second memory 64 and whose generation has been started last is based for the n-th stock among the N stocks.

In the present embodiment, the evaluation unit 66 calculates, for each of the N stocks, a difference value obtained by subtracting a transaction price on which a combination optimization problem whose generation has been started last is based from a latest transaction price as an evaluation value. The evaluation value, which is such a difference value, represents the amount of increase from the start of generation of the combination optimization problem at the latest transaction price in a case of positive, and represents the amount of decrease from the start of generation of the combination optimization problem at the latest transaction price in a case of negative.

In the present embodiment, the evaluation unit 66 generates the evaluation value for the stock related to the transaction price included in the acquired market state packet every time the acquisition unit 36 acquires the market state packet, namely, every time the acquisition notification is output. Then, every time the acquisition unit 36 acquires the market state packet, the calculated evaluation value is provided to the state control unit 44.

In the present embodiment, the state information includes N pieces of element state information. The N pieces of element state information correspond one-to-one to the N stocks traded in the market server device 12. The n-th element state information among the N pieces of element state information corresponds to the n-th stock among the N stocks.

Each of the N pieces of element state information indicates a first dirty state (third state) or a second dirty state (fourth state) as the dirty state. Each of the N pieces of element state information indicates a clean state, a first dirty state, or a second dirty state. Each of the N pieces of element state information may be, for example, a state machine, or may be a flag of two or more bits capable of identifying a clean state, a first dirty state, or a second dirty state.

The state control unit 44 acquires the acquisition notification from the acquisition unit 36 and acquires the evaluation value from the evaluation unit 66. The state control unit 44 also acquires a solving start notification from the problem generation unit 42.

The state control unit 44 sets all the N pieces of element state information in a clean state in response to receiving the solving start notification from the problem generation unit 42. The state control unit 44 sets all the N pieces of element state information in a clean state in response to the problem generation unit 42 starting generation of the combination optimization problem.

In response to receiving the acquisition notification from the acquisition unit 36, namely, in response to the acquisition unit 36 acquiring the market state packet, the state control unit 44 identifies the element state information corresponding to the stock related to the transaction price included in the acquired market state packet among the N pieces of element state information. Then, the state control unit 44 determines whether the evaluation value acquired together with the market state packet is outside the predetermined range or within the predetermined range. In a case where the evaluation value falls outside the predetermined range, the state control unit 44 sets the identified element state information to the first dirty state. Moreover, in a case where the evaluation value falls within the predetermined range, the state control unit 44 sets the identified element state information to the second dirty state. For example, in response to acquiring the market state packet including the transaction price of the n-th stock, the state control unit 44 sets the n-th element state information to the first dirty state in a case where the evaluation value of the n-th stock is outside the predetermined range, and sets the n-th element state information to the second dirty state in a case where the evaluation value of the n-th stock falls within the predetermined range.

As an example, the predetermined range is a range of 0 or less. In this case, each of the N pieces of element state information is in the first dirty state in a case where, for the corresponding stock, the latest transaction price is higher than the transaction price on which the combination optimization problem whose generation has been started last is based, or in a case where the latest transaction price is the same as the transaction price on which the combination optimization problem whose generation has been started last is based. In addition, each of the N pieces of element state information is in the second dirty state in a case where the latest transaction price of the corresponding stock falls below the transaction price on which the combination optimization problem that generation has been started last is based.

In the third embodiment, in a case where the order packet is generated, the process execution unit 46 identifies element state information corresponding to stocks indicated to be traded by the transaction information included in the generated order packet among the N pieces of element state information. Then, in a case where the identified element state information is in the clean state, the process execution unit 46 outputs the order packet to the market server device 12. Specifically, in a case where the n-th element state information is in a clean state, the process execution unit 46 outputs an order packet including transaction information indicating that the n-th stock is to be traded to the market server device 12.

Moreover, in the present embodiment, the process execution unit 46 generates an order packet whose trade direction is a buy order. Then, in a case where the identified element state information is in the first dirty state, the process execution unit 46 stops outputting the order packet to the market server device 12. In a case where the identified element state information is in the second dirty state, the process execution unit 46 outputs the order packet to the market server device 12. In a case where the n-th element state information is in the first dirty state, the process execution unit 46 stops outputting the order packet including the transaction information indicating that the n-th stock is traded to the market server device 12. In addition, in a case where the n-th element state information is in the second dirty state, the process execution unit 46 outputs an order packet including transaction information indicating that the n-th stock is to be traded to the market server device 12.

Even in a case where the transaction price of the stock to be traded with the order packet changes after the start of generation of the combination optimization problem, for example, depending on the trade direction, it may be advantageous for the user of the information processing device 20. For example, in a case where a buy order is placed, in a case where stocks to be traded with an order packet fall, it may be advantageous for the user of the information processing device 20. In addition, in a case where the sell order is placed, in a case where the stock to be traded with the order packet increases, it may be advantageous for the user of the information processing device 20. It can be said that such an order packet advantageous for the user is an order packet with high effectiveness.

Even in a case where the transaction price changes after the generation of the combination optimization problem starts, the information processing device 20 according to the present embodiment can determine that the effectiveness is high to output the order packet to the market server device 12 in a case where the transaction price of the stock to be traded with the order packet is advantageous for the user.

The predetermined range in which the evaluation values are compared is not limited to the range of 0 or more, and may be other ranges. For example, in a case where the process execution unit 46 generates an order packet that is a sell order, the predetermined range in which the evaluation values are compared may be a range of 0 or more. As a result, in a case where the order packet whose trade direction is the sell order is generated, the information processing device 20 can output the order packet advantageous for the user to the market server device 12.

Moreover, for example, in a case where the process execution unit 46 generates an order packet that is a buy order, the predetermined range in which the evaluation values are compared may be a range larger than a positive predetermined value. In this case, each of the N pieces of element state information is in the first dirty state in a case where the increase amount of the transaction price of the corresponding stock is not equal to or more than, namely, is less than the predetermined amount, and each of the N pieces of element state information is in the second dirty state in a case where the amount of increase is equal to or more than the predetermined amount. As a result, the information processing device 20 can output the order packet to the market server device 12 in a case where a greater advantage can be obtained by the user.

Moreover, in a case where the process execution unit 46 generates an order packet that is a buy order and places a buy order in the case of an upward trend, the predetermined range in which the evaluation values are compared may be a range of 0 or more. In addition, in a case where the process execution unit 46 generates an order packet that is a sell order and places a sell order in a case of a downward trend, the predetermined range in which the evaluation values are compared may be a range of 0 or less.

Moreover, in the present embodiment, each of the N pieces of element state information represents two states of the first dirty state and the second dirty state as the dirty state. Alternatively, each of the N pieces of element state information may represent three or more states as the dirty state.

For example, each of the N pieces of element state information may represent the first dirty state, the second dirty state, or the third dirty state as the dirty state. In this case, in a case where the acquisition notification is acquired, the state control unit 44 changes the corresponding element state information to any one of the first dirty state, the second dirty state, and the third dirty state according to the magnitude of the evaluation value.

For example, the state control unit 44 sets the information in the second dirty state in a case where the evaluation value is a positive first threshold value or more, sets the information in the third dirty state in a case where the evaluation value is a negative second threshold value or less, and sets the information in the first dirty state in a case where the evaluation value is smaller than the first threshold value and larger than the second threshold value.

Then, in such a case, for example, in a case where the element state information corresponding to the stock to be traded with the order packet is in the first dirty state, the process execution unit 46 stops outputting the order packet to the market server device 12.

Moreover, in such a case, the process execution unit 46 outputs the order packet to the market server device 12 in a case where the element state information corresponding to the stock to be traded with the order packet that is a buy order is in the second dirty state. In a case where the element state information corresponding to the stock to be traded with the order packet that is a buy order is in the third dirty state, the process execution unit 46 stops outputting the order packet to the market server device 12. In a case where the element state information corresponding to the stock to be traded with the order packet that is a sell order is in the third dirty state, the process execution unit 46 outputs the order packet to the market server device 12. In a case where the element state information corresponding to the stock to be traded with the order packet that is a sell order is in the second dirty state, the process execution unit 46 stops outputting the order packet to the market server device 12. As a result, the information processing device 20 can output an order packet advantageous for the user to the market server device 12 in a case where the order packet in any trade direction of the buy order and the sell order is output.

Fourth Embodiment

Next, a market system 10 according to the fourth embodiment will be described.

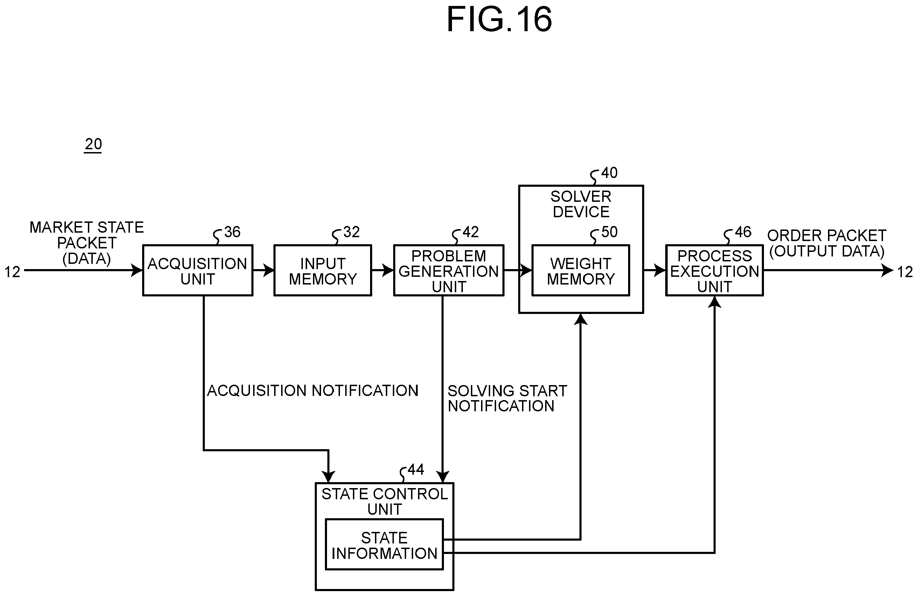

FIG. 16 is a diagram illustrating a configuration of an information processing device 20 according to the fourth embodiment. In the fourth embodiment, the solver device 40 acquires state information from the state control unit 44. The solver device 40 determines whether the state information is in the dirty state during the solving process of the combination optimization problem. In a case where the state information is in the dirty state, the solver device 40 ends the solving process in the middle.

In a case where the state information changes from the clean state to the dirty state, the state control unit 44 may provide an interrupt signal to the solver device 40. In this case, the solver device 40 ends the solving process halfway in the middle in response to receiving the interrupt signal from the state control unit 44 during the solving process of the combination optimization problem.

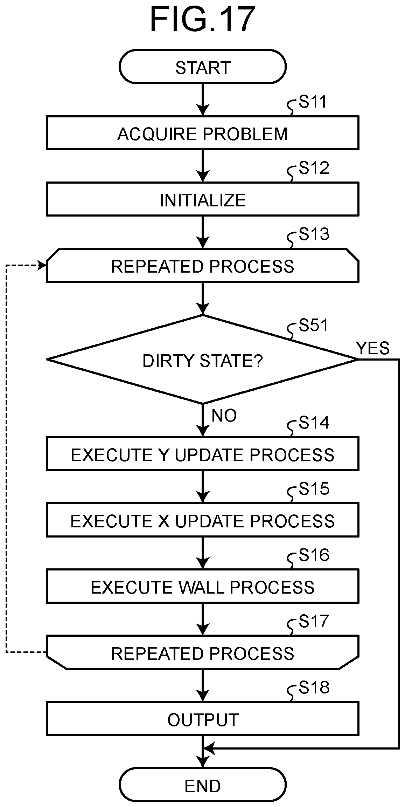

FIG. 17 is a flowchart illustrating a procedure of a process of the solver device 40 according to the fourth embodiment.

In the fourth embodiment, in a case where the solver device 40 is a simulated bifurcation machine, for example, processing is executed according to the procedure illustrated in FIG. 17. The same steps as those described in the flowchart of FIG. 3 are denoted by the same step numbers, and the description thereof will be omitted.

In the loop processing between S13 and S17, the solver device 40 repeats the processes of S14 to S16 a preset number of times. The process of S14 to S16 includes a matrix arithmetic process of matrix-multiplying N position variables ($x_1$ to $x_N$) by a matrix including weight values of N rows×N columns, and a time evolution process of time-evolving the N position variables ($x_1$ to $x_N$) and the N momentum variables ($y_1$ to $y_N$).

The solver device 40 executes the process of S51 at any timing between S13 and S17. In the flowchart illustrated in FIG. 17, the solver device 40 executes the process of S51 between S13 and S14, but may execute the process at another timing.

In S51, the solver device 40 determines whether the state information is in the dirty state. In a case where the state information is not in the dirty state, namely, in a case where the state information is in the clean state (No in S51), the solver device 40 continues the loop process between S13 and S17. In a case where the state information is in the dirty state (Yes in S51), the solver device 40 ends the matrix multiplication process and the time evolution process in the middle, exits the loop process between S13 and S17, and ends this procedure. In a case where the state information is in the dirty state, the solver device 40 may advance the process to S18 and output the solution currently obtained.

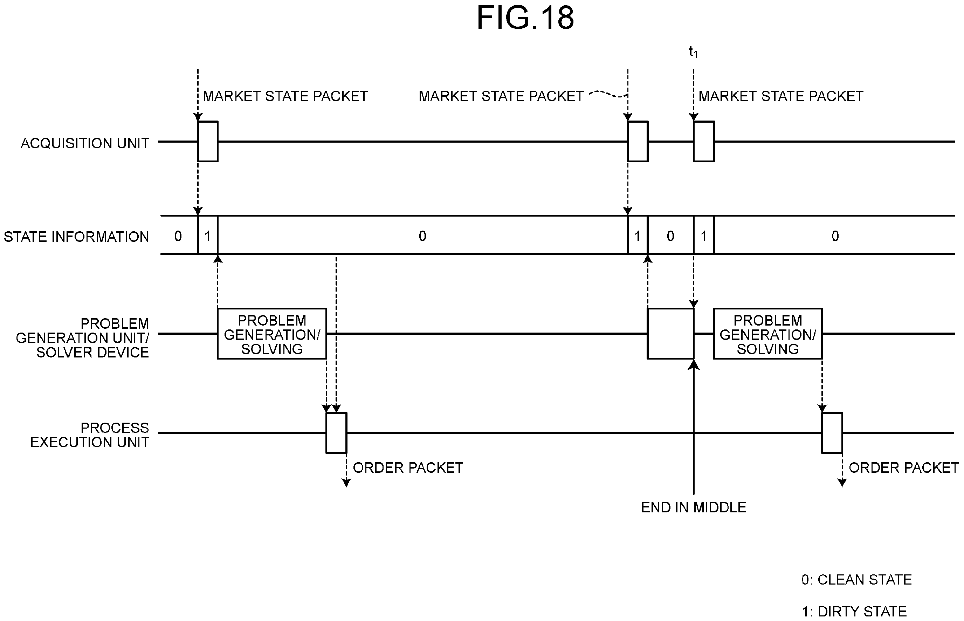

FIG. 18 is a timing chart illustrating a procedure of a process of the information processing device 20 according to the fourth embodiment.

In a case where the information processing device 20 according to the fourth embodiment acquires a new market state packet during the process of generating and solving the combination optimization problem (for example, $t_1$ in FIG. 18), the process of generating and solving the combination optimization problem is terminated in the middle. Then, for example, in a case where the combination optimization problem is generated according to the acquisition of the market state packet, the generation and the solving process of a new combination optimization problem based on the acquired new market state packet are started.

As described above, in a case where the information processing device 20 according to the fourth embodiment acquires a new market state packet during the process of generating and solving the combination optimization problem, it is possible to start the generation and the solving process of the next new combination optimization problem earlier by interrupting the process of generating and solving the combination optimization problem. Therefore, the information processing device 20 according to the fourth embodiment can execute an optimal transaction earlier based on the latest stock transaction price.

Fifth Embodiment

Next, a control system 110 according to the fifth embodiment will be described.

In the first to fourth embodiments, an example in which the information processing device 20 is applied to the market system 10 is described. The information processing device 20 is not limited to the market system 10, and can be applied to other systems as long as the system executes a process using the combination optimization problem on data that changes with the lapse of time. For example, the information processing device 20 can also be applied to the control system 110 that controls a movement operation in a moving object.

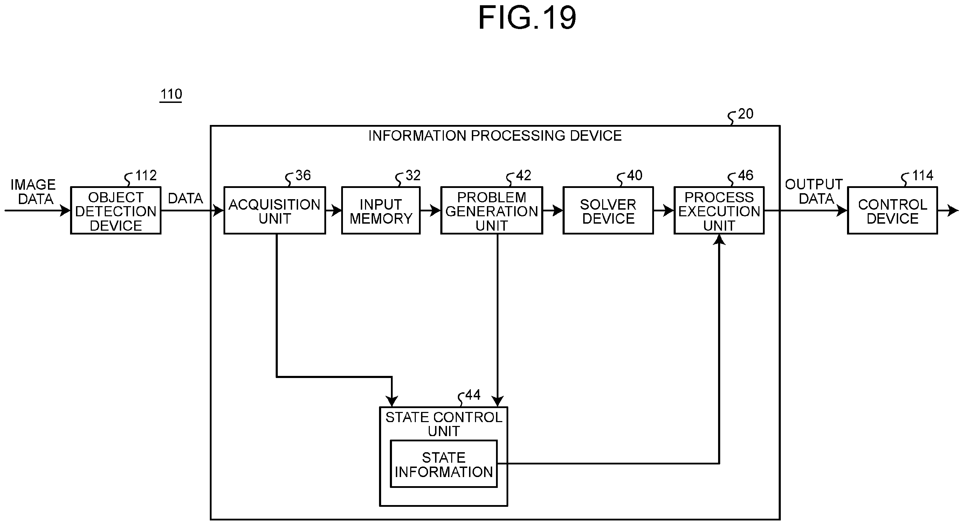

FIG. 19 is a diagram illustrating an example of a configuration of a control system 110 according to the fifth embodiment. The control system 110 controls, for example, a moving object that autonomously moves, such as an autonomous car, a drone, or a robot.

The control system 110 includes an object detection device 112, an information processing device 20, and a control device 114.

The object detection device 112 acquires, for example, image data from a camera that images the surroundings of the moving object to be controlled. The object detection device 112 may acquire sensor data from another sensor device in addition to the image data. The object detection device 112 detects coordinate data representing three-dimensional coordinates for each of one or more objects around the moving object based on the acquired image data, sensor data, and the like. Moreover, the object detection device 112 may also detect three-dimensional coordinates of the moving object itself to be controlled.

The object detection device 112 irregularly and repeatedly outputs, to the information processing device 20, data including identification information for identifying any one of one or more objects and coordinate data (input information) representing coordinates of the object identified by the identification information. Note that the input information may include, in addition to the coordinate data, other related information such as the moving speed, the acceleration, the moving direction, and the type of the object identified by the identification information.

The control device 114 acquires, from the information processing device 20, output data including output information indicating that a predetermined operation is performed on the moving object in order to control the moving object. The control device 114 controls the moving object based on the acquired output data.

Moreover, the output information may indicate that a predetermined operation is performed on any of one or more objects around the moving object. For example, the output information may include information indicating that information indicating movement control, a predetermined instruction, warning, or the like is given to any of one or more objects around the moving object. In this case, the output data includes identification information for identifying any object of one or more objects, and output information. Moreover, in a case where such output data is received, the control device 114 executes a predetermined operation on the object identified by the identification information included in the output data.

The information processing device 20 has the same configuration as that described in the first to fourth embodiments. However, the information processing device 20 has different content between data to be acquired and output data to be output.

The information processing device 20 generates a combination optimization problem based on data irregularly given from the object detection device 112, and causes the solver device 40 to solve the combination optimization problem. Moreover, the information processing device 20 sets the state information stored in the state control unit 44 to the clean state in response to starting generation of the combination optimization problem, and sets the state information to the dirty state in response to acquiring data from the object detection device 112. Then, the information processing device 20 acquires a solution of the combination optimization problem from the solver device 40, and executes a process based on the solution in response to acquiring the solution.

Moreover, the information processing device 20 changes a process based on the solution output from the solver device 40 according to the state information. For example, in a case where the state information is in the clean state, the information processing device 20 executes the first process in response to acquiring the solution from the solver device 40, and in a case where the state information is in the dirty state, the information processing device executes the second process different from the first process in response to acquiring the solution from the solver device 40. Moreover, for example, the information processing device 20 may generate output data based on the acquired solution, output the output data to the control device 114 which is an example of the first device in a case where the state information is in the clean state, and stop outputting the output data to the control device 114 in the dirty state.

In a case where processing is executed on data by using the combination optimization problem, such an information processing device 20 can prevent execution of an inappropriate process on a moving object or the like.

Hardware Configuration

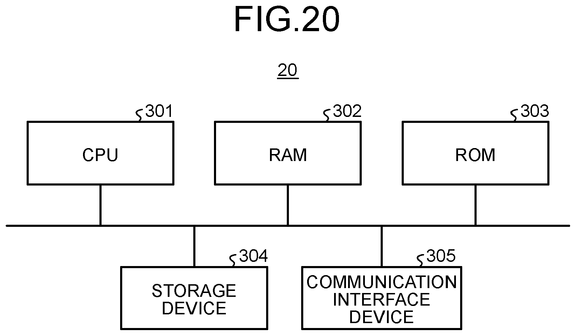

FIG. 20 is a diagram illustrating an example of a hardware configuration of the information processing device 20. The partial configuration not including the solver device 40 in the information processing device 20 is implemented by a computer having a hardware configuration as illustrated in FIG. 20, for example. The information processing device 20 includes a central processing unit (CPU) 301, a random access memory (RAM) 302, a read only memory (ROM) 303, a storage device 304, and a communication interface device 305. These units are connected by a bus.

The CPU 301 (an example of a hardware processor) is one or more processors that execute arithmetic process, control process, and the like according to a program. The CPU 301 uses a predetermined region of the RAM 302 for a work region, and executes various processes in cooperation with programs stored in the ROM 303, the storage device 304, and so forth.

The RAM 302 is a memory such as a synchronous dynamic random access memory (SDRAM). The RAM 302 functions as a work region of the CPU 301. The ROM 303 is a memory that stores programs and various types of information in a non-rewritable manner.

The storage device 304 is a device that writes and reads data to and from a semiconductor storage medium such as a flash memory, a magnetically or optically recordable storage medium, or the like. The storage device 304 writes and reads data to and from the storage medium under the control of the CPU 301. The communication interface device 305 communicates with an external device via a network in accordance with control from the CPU 301.

The program executed by the computer causes the computer to function as the information processing device 20. This program is developed on the RAM 302 and executed by the CPU 301 (processor).

In addition, the program executed by the computer is recorded in and provided by a computer-readable recording medium such as a CD-ROM, a flexible disk, a CD-R, or a digital versatile disk (DVD) as a file in a format that can be installed or executed in the computer.

Moreover, the program may be stored on a computer connected to a network such as the Internet and provided by being downloaded via the network. Moreover, the program may be provided or distributed via a network such as the Internet. In addition, the program executed by the information processing device 20 may be provided by being incorporated in the ROM 303 or the like in advance.

The program for causing the computer to function as the information processing device 20 has a module configuration including, for example, an acquisition module, a problem generation module, a state control module, and a process execution module. The program may further include an evaluation module. This program is executed by the CPU 301 to load each module into the RAM 302, and causes the CPU 301 to function as the acquisition unit 36, the problem generation unit 42, the state control unit 44, and the process execution unit 46. In a case where the CPU 301 is a plurality of processors, these units may be divided into and carried by a plurality of processors. The program may further cause the CPU 301 to function as the evaluation unit 66. In addition, this program causes the RAM 302 and the storage device 304 to function as the input memory 32. Note that some or all of these configurations may be configured by hardware.

Moreover, the solver device 40 may be implemented by one or more reconfigurable semiconductor devices such as a field-programmable gate array (FPGA). Moreover, the solver device 40 may be implemented by an electronic circuit including one or more CPUs, a microprocessor, a graphics processing unit (GPU), an application specific integrated circuit (ASIC), or circuits thereof. Moreover, the solver device 40 may be implemented by an information processing device such as a computer, a computer system configured by a plurality of computers or servers communicating with each other via a network, a PC cluster in which a plurality of computers executes information processing in cooperation, or the like.

Note that the solver device 40 may be incorporated in the information processing device 20. For example, the solver device 40 may be incorporated as an accelerator in part of the information processing device 20. Moreover, the solver device 40 may include some functions of the information processing device 20, for example, the problem generation unit 42.

Moreover, in a case where the information processing device 20 is implemented by a reconfigurable semiconductor device such as an FPGA, circuit information (configuration data) written in the reconfigurable semiconductor device to operate the reconfigurable semiconductor device as the information processing device 20 may be stored on a computer connected to a network such as the Internet and provided by being downloaded via the network. In addition, circuit information (configuration data) written in the reconfigurable semiconductor device in order to operate the reconfigurable semiconductor device as the information processing device 20 may be recorded in a computer-readable recording medium and provided.

Moreover, in a case where the information processing device 20 is implemented by a semiconductor device such as an ASIC, circuit information representing a configuration of a circuit described in a hardware description language used for designing and manufacturing the information processing device 20 may be stored on a computer connected to a network such as the Internet, and may be provided by being downloaded via a network. Moreover, circuit information representing a configuration of a circuit described in a hardware description language used for designing and manufacturing the information processing device 20 may be provided by being recorded in a computer-readable recording medium.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

Supplement

The above-described embodiments can be summarized in the following technical schemes.

(Technical scheme 1)

An information processing device executing processing on data, the information processing device comprising: a hardware processor connected to memories and configured to

acquire the data,
generate a combination optimization problem based on the acquired data, and cause a solver device to solve the combination optimization problem,
set state information to a first state in response to starting generation of the combination optimization problem, and set the state information to a second state in response to acquiring the data,
acquire a solution of the combination optimization problem from the solver device, and execute a process based on the solution, and
change the process based on the solution by the state information in executing the process based on the solution.

(Technical scheme 2)

The information processing device according to the technical scheme 1, wherein the hardware processor is configured to

acquire data repeatedly given in acquiring the data, and
generate, in generating the combination optimization problem, the combination optimization problem in response to acquiring the data or at a preset cycle, and cause the solver device to solve the combination optimization problem.

(Technical scheme 3)

The information processing device according to the technical scheme 1 or 2, wherein the hardware processor is configured to, in executing the process based on the solution,

execute a first process in response to acquiring the solution from the solver device in a case where the state information indicates the first state, and

execute a second process different from the first process in response to acquiring the solution from the solver device in a case where the state information indicates the second state.

(Technical scheme 4)

The information processing device according to any one of the technical schemes 1 to 3, wherein

a cost function in the combination optimization problem includes N decision variables, where N is an integer of two or more, and a plurality of weight values,

a term included in the cost function is represented by multiplication of one or more decision variables of the N decision variables by one weight value of the plurality of weight values,

the memories includes an input memory to store N input values on which the plurality of weight values is based, and

the solver device includes a weight memory to store the plurality of weight values.

(Technical scheme 5)

The information processing device according to the technical scheme 4, wherein

an n-th input value, where n being an integer of one or more and N or less, among the N input values corresponds to an n-th target among the N targets,

the data includes input information about at least one of the N targets, and

the hardware processor is configured to

rewrite, in acquiring the data, the n-th input value stored in the input memory on the basis of the input information related to the n-th target in a case where the data including the input information related to the n-th target is acquired, and

generate, in generating the combination optimization problem, the plurality of weight values on the basis of the N input values stored in the input memory and write the plurality of generated weight values in the weight memory.

(Technical scheme 6)

The information processing device according to the technical scheme 5, wherein

an n-th decision variable among the N decision variables indicates whether a predetermined operation is performed on the n-th target, and

the hardware processor is configured to, in executing the process based on the solution,

generate output data including output information indicating that the predetermined operation is performed on at least one of the N targets, the one being identified by the solution,

output the output data to a first device in a case where the state information indicates the first state, and

stop, in the second state, the output of the output data to the first device.

(Technical scheme 7)

The information processing device according to the technical scheme 6, wherein

the N targets are classified into L groups, where L is an integer of 2 or more and N or less,

the state information includes L pieces of element state information,

l-th element state information, where l is an integer of one or more and L or less, among the L pieces of element state information corresponds to an l-th group among the L groups,

the hardware processor is configured to, in controlling the state information,

set the L pieces of element state information to the first state in response to starting generation of the combination optimization problem, and

set the l-th element state information to the second state in response to acquiring the data including the input information about the l-th group, and

the hardware processor is configured to, in executing the process based on the solution,

output, to the first device, the output data including the output information indicating that the predetermined operation is performed on the target belonging to the l-th group in a case where the l-th element state information indicates the first state, and
stop outputting, to the first device, the output data including the output information indicating that the predetermined operation is performed on the target belonging to the l-th group in a case where the l-th element state information indicates the second state.

(Technical scheme 8)

The information processing device according to the technical scheme 3, wherein

the hardware processor is further configured to generate an evaluation value for evaluating validity of output data to be output to a first device on the basis of a comparison result between the acquired first data and second data acquired before the first data,
the hardware processor is configured to, in controlling the state information,

set the state information to the first state in response to starting generation of the combination optimization problem,
set, in response to acquiring the data, the state information to a third state belonging to the second state in a case where the evaluation value falls outside a predetermined range, and
set, in response to acquiring the data, the state information to a fourth state belonging to the second state in a case where the evaluation value falls within the predetermined range, and

the hardware processor is configured to, in executing the process based on the solution,

output the output data to the first device in a case where the state information indicates the first state,
stop outputting the output data to the first device in a case where the state information indicates the third state, and
output the output data to the first device in a case where the state information indicates the fourth state.

(Technical scheme 9)

The information processing device according to the technical scheme 6, wherein

the hardware processor is further configured to generate an evaluation value for evaluating validity of the output data to be output to the first device on the basis of a comparison result between first data being the data and second data being the data acquired before the first data, the first data including the input information related to the n-th target, the second data including the input information related to the n-th target,
the state information includes N pieces of element state information,
n-th element state information among the N pieces of element state information corresponds to the n-th target,
the hardware processor is configured to, in controlling the state information,

set the N pieces of element state information to the first state in response to starting generation of the combination optimization problem,
set, in response to acquiring the first data, the n-th element state information to a third state in a case where the evaluation value falls outside a predetermined range, and
set, in response to acquiring the first data, the n-th element state information to a fourth state in a case where the evaluation value falls within the predetermined range, and

the hardware processor is configured to, in executing the process based on the solution,

output, to the first device, the output data including the output information indicating that the predetermined operation is performed on the n-th target in a case where the n-th element state information indicates the first state,
stop outputting, to the first device, the output data including the output information indicating that the predetermined operation is performed on the n-th target in a case where the n-th element state information indicates the third state, and

output, to the first device, the output data including the output information indicating that the predetermined operation is performed on the n-th target in a case where the n-th element state information indicates the fourth state.

(Technical scheme 10)

The information processing device according to any one of the technical schemes 1 to 9, further comprising the solver device,
wherein the solver device is configured to ends a process for solving the combination optimization problem in a case where the state information indicates the second state in a middle of the process for solving the combination optimization problem.

(Technical scheme 11)

The information processing device according to the technical scheme 10, wherein

the solver device is a simulated bifurcation machine, and
the solver device is configured to

alternately and repeatedly execute a process of updating N momentum variables, where N is an integer of one or more, and a process of updating N position variables, and
determine, during the repetitive process, whether the state information indicates the second state and terminate the alternately repetitive process in a case where the state information indicates the second state.

(Technical scheme 12)

The information processing device according to any one of the technical schemes 1 to 11, wherein

the hardware processor is configured to acquire, as the data, a market state packet from a market server device serving to trade N targets, where N is an integer of one or more, the market state packet including a transaction price for at least one of the N targets,
an n-th decision variable, where n is an integer of one or more and N or less, among N decision variables included in the cost function in the combination optimization problem corresponds to an n-th target among the N targets, the n-th decision variable representing whether to trade the n-th target, and
the hardware processor is configured to, in executing the process based on the solution,

determine, on the basis of the solution, whether to perform a transaction for each of the N targets,
generate an order packet including transaction information about a target having been determined to perform transaction among the N targets, and
transmit the order packet to the market server device.

(Technical scheme 13)

The information processing device according to any one of the technical schemes 1 to 11, wherein

the data includes coordinate data representing coordinates of a moving object or at least one object of one or more objects around the moving object, and
the hardware processor is configured to, in executing a process based on the solution, output data including output information for controlling the moving object to a control device.

(Technical scheme 14)

The information processing device according to any one of the technical schemes 1 to 13, wherein each decision variable of the plurality of decision variables included in the cost function in the combination optimization problem is a binary discrete variable.

(Technical scheme 15)

The information processing device according to the technical scheme 14, wherein the cost function is a quadratic function of the plurality of decision variables.

(Technical scheme 16)

The information processing device according to the technical scheme 15, wherein the combination optimization problem is a quadratic unconstrained binary optimization (QUBO) problem.

(Technical scheme 17)

The information processing device according to the technical scheme 16, wherein the solver device is configured to solve the QUBO problem as an Ising problem.

(Technical scheme 18)

The information processing device according to the technical scheme 17, wherein the solver device is configured to solve the Ising problem by a simulated bifurcation algorithm.

(Technical scheme 19)

The information processing device according to the technical scheme 15, wherein

the cost function is a cubic or higher function of the plurality of decision variables, and
the combination optimization problem is a higher order binary optimization (HUBO) problem.

(Technical scheme 20)

An information processing method implemented by a computer executing processing on data, the method comprising:

acquiring the data;
generating a combination optimization problem based on the acquired data and causing a solver device to solve the combination optimization problem;
setting state information to a first state in response to starting generation of the combination optimization problem, and setting the state information to a second state in response to acquiring the data;
acquiring a solution of the combination optimization problem from the solver device;
executing a process based on the solution; and
changing the process based on the solution by the state information in executing the process based on the solution.

(Technical scheme 21)

A computer program comprising computer-readable instructions to be executed by a computer, the instructions causing the computer to:

acquire data;
generate a combination optimization problem based on the acquired data, and cause a solver device to solve the combination optimization problem;
set state information to a first state in response to starting generation of the combination optimization problem, and set the state information to a second state in response to acquiring the data;
acquire a solution of the combination optimization problem from the solver device;
execute a process based on the solution; and
change the process based on the solution by the state information in executing the process based on the solution.

(Technical scheme 22)

Circuit information described in a hardware description language, the circuit information representing a configuration of a circuit, the circuit information causing the circuit to function as an information processing device executing processing on data, the processing comprising:

acquiring the data;
generating a combination optimization problem based on the acquired data and causing a solver device to solve the combination optimization problem;
setting state information to a first state in response to starting generation of the combination optimization problem, and setting the state information to a second state in response to acquiring the data;
acquiring a solution of the combination optimization problem from the solver device;
executing a process based on the solution; and
changing the process based on the solution by the state information in executing the process based on the solution.

(Technical scheme 23)

Circuit information written in a reconfigurable semiconductor device for operating the reconfigurable semiconductor device, the circuit information causing the reconfigurable semiconductor device to function as an information processing device executing processing on data, the processing comprising:

acquiring the data;
generating a combination optimization problem based on the acquired data and causing a solver device to solve the combination optimization problem;
setting state information to a first state in response to starting generation of the combination optimization problem, and setting the state information to a second state in response to acquiring the data;
acquiring a solution of the combination optimization problem from the solver device;
executing a process based on the solution; and
changing the process based on the solution by the state information in executing the process based on the solution.

## Claims

1. An information processing device (20) executing processing on data, the information processing device comprising:
a hardware processor (301) connected to memories and configured to

acquire the data,
generate a combination optimization problem based on the acquired data, and cause a solver device (40) to solve the combination optimization problem,
set state information to a first state in response to starting generation of the combination optimization problem, and set the state information to a second state in response to acquiring the data,
acquire a solution of the combination optimization problem from the solver device (40), and execute a process based on the solution, and
change the process based on the solution by the state information in executing the process based on the solution.

2. The information processing device according to claim 1, wherein the hardware processor (301) is configured to

acquire data repeatedly given in acquiring the data, and
generate, in generating the combination optimization problem, the combination optimization problem in response to acquiring the data or at a preset cycle, and cause the solver device (40) to solve the combination optimization problem.

3. The information processing device according to claim 1 or 2, wherein the hardware processor (301) is configured to, in executing the process based on the solution,

execute a first process in response to acquiring the solution from the solver device (40) in a case where the state information indicates the first state, and
execute a second process different from the first process in response to acquiring the solution from the solver device (40) in a case where the state information indicates the second state.

4. The information processing device according to claim 1 to 3, wherein

a cost function in the combination optimization problem includes N decision variables, where N is an integer of two or more, and a plurality of weight values,

a term included in the cost function is represented by multiplication of one or more decision variables of the N decision variables by one weight value of the plurality of weight values,

the memories includes an input memory (32) to store N input values on which the plurality of weight values is based, and

the solver device (40) includes a weight memory (50) to store the plurality of weight values.

5. The information processing device according to claim 4, wherein

an n-th input value, where n being an integer of one or more and N or less, among the N input values corresponds to an n-th target among the N targets,

the data includes input information about at least one of the N targets, and

the hardware processor (301) is configured to

rewrite, in acquiring the data, the n-th input value stored in the input memory (32) on the basis of the input information related to the n-th target in a case where the data including the input information related to the n-th target is acquired, and

generate, in generating the combination optimization problem, the plurality of weight values on the basis of the N input values stored in the input memory (32) and write the plurality of generated weight values in the weight memory (50).

6. The information processing device according to claim 5, wherein

an n-th decision variable among the N decision variables indicates whether a predetermined operation is performed on the n-th target, and

the hardware processor (301) is configured to, in executing the process based on the solution,

generate output data including output information indicating that the predetermined operation is performed on at least one of the N targets, the one being identified by the solution,

output the output data to a first device (12) in a case where the state information indicates the first state, and

stop, in the second state, the output of the output data to the first device (12).

7. The information processing device according to claim 6, wherein

the N targets are classified into L groups, where L is an integer of 2 or more and N or less,

the state information includes L pieces of element state information,

l-th element state information, where 1 is an integer of one or more and L or less, among the L pieces of element state information corresponds to an l-th group among the L groups,

the hardware processor (301) is configured to, in controlling the state information,

set the L pieces of element state information to the first state in response to starting generation of the combination optimization problem, and

set the l-th element state information to the second state in response to acquiring the data including the input information about the l-th group, and

the hardware processor is configured to, in executing the process based on the solution,

output, to the first device (12), the output data including the output information indicating that the predetermined operation is performed on the target belonging to the l-th group in a case where the l-th element state information indicates the first state, and

stop outputting, to the first device (12), the output data including the output information indicating that the predetermined operation is performed on the target belonging to the l-th group in a case where the l-th element state information indicates the second state.

8. The information processing device according to claim 3, wherein

the hardware processor (301) is further configured to generate an evaluation value for evaluating validity of output data to be output to a first device (12) on the basis of a comparison result between the acquired first data and second data acquired before the first data,

the hardware processor (301) is configured to, in controlling the state information,

set the state information to the first state in response to starting generation of the combination optimization problem,

set, in response to acquiring the data, the state information to a third state belonging to the second state in a case where the evaluation value falls outside a predetermined range, and

set, in response to acquiring the data, the state information to a fourth state belonging to the second state in a case where the evaluation value falls within the predetermined range, and

the hardware processor (301) is configured to, in executing the process based on the solution,

output the output data to the first device (12) in a case where the state information indicates the first state,

stop outputting the output data to the first device (12) in a case where the state information indicates the third state, and

output the output data to the first device (12) in a case where the state information indicates the fourth state.

9. The information processing device according to claim 6, wherein

the hardware processor (301) is further configured to generate an evaluation value for evaluating validity of the output data to be output to the first device (12) on the basis of a comparison result between first data being the data and second data being the data acquired before the first data, the first data including the input information related to the n-th target, the second data including the input information related to the n-th target,

the state information includes N pieces of element state information,

n-th element state information among the N pieces of element state information corresponds to the n-th target,

the hardware processor (301) is configured to, in controlling the state information,

set the N pieces of element state information to the first state in response to starting generation of the combination optimization problem,

set, in response to acquiring the first data, the n-th element state information to a third state in a case where the evaluation value falls outside a predetermined range, and

set, in response to acquiring the first data, the n-th element state information to a fourth state in a case where the evaluation value falls within the predetermined range, and

the hardware processor (301) is configured to, in executing the process based on the solution,

output, to the first device (12), the output data including the output information indicating that the predetermined operation is performed on the n-th target in a case where the n-th element state information indicates the first state,

stop outputting, to the first device (12), the output data including the output information indicating that the predetermined operation is performed on the n-th target in a case where the n-th element state information indicates the third state, and

output, to the first device (12), the output data including the output information indicating that the predetermined operation is performed on the n-th target in a case where the n-th element state information indicates the fourth state.

10. The information processing device according to claim 1 to 10, further comprising the solver device (40), wherein the solver device (40) is configured to ends a process for solving the combination optimization problem in a case where the state information indicates the second state in a middle of the process for solving the combination optimization problem.

11. The information processing device according to claim 10, wherein

the solver device (40) is a simulated bifurcation machine, and

the solver device (40) is configured to

alternately and repeatedly execute a process of updating N momentum variables, where N is an integer of one or more, and a process of updating N position variables, and
determine, during the repetitive process, whether the state information indicates the second state and terminate the alternately repetitive process in a case where the state information indicates the second state.

12. The information processing device according to any one of claims 1 to 11, wherein

the hardware processor (301) is configured to acquire, as the data, a market state packet from a market server device (12) serving to trade N targets, where N is an integer of one or more, the market state packet including a transaction price for at least one of the N targets,
an n-th decision variable, where n is an integer of one or more and N or less, among N decision variables included in the cost function in the combination optimization problem corresponds to an n-th target among the N targets, the n-th decision variable representing whether to trade the n-th target, and
the hardware processor (301) is configured to, in executing the process based on the solution,

determine, on the basis of the solution, whether to perform a transaction for each of the N targets,
generate an order packet including transaction information about a target having been determined to perform transaction among the N targets, and
transmit the order packet to the market server device (12).

13. The information processing device according to any one of claims 1 to 11, wherein

the data includes coordinate data representing coordinates of a moving object or at least one object of one or more objects around the moving object, and
the hardware processor (301) is configured to, in executing a process based on the solution, output data including output information for controlling the moving object to a control device (114).

14. An information processing method implemented by a computer executing processing on data, the method comprising:

acquiring the data;
generating a combination optimization problem based on the acquired data and causing a solver device to solve the combination optimization problem;
setting state information to a first state in response to starting generation of the combination optimization problem, and setting the state information to a second state in response to acquiring the data;
acquiring a solution of the combination optimization problem from the solver device;
executing a process based on the solution; and
changing the process based on the solution by the state information in executing the process based on the solution.

15. A computer program comprising computer-readable instructions to be executed by a computer, the instructions causing the computer to:

acquire data;
generate a combination optimization problem based on the acquired data, and cause a solver device to solve the combination optimization problem;
set state information to a first state in response to starting generation of the combination optimization problem, and set the state information to a second state in response to acquiring the data;
acquire a solution of the combination optimization problem from the solver device;
execute a process based on the solution; and
change the process based on the solution by the state information in executing the process based on the solution.

16. Circuit information described in a hardware description language, the circuit information representing a configuration of a circuit, the circuit information causing the circuit to function as an information processing device executing processing on data, the processing comprising:

acquiring the data;
generating a combination optimization problem based on the acquired data and causing a solver device to solve the combination optimization problem;

setting state information to a first state in response to starting generation of the combination optimization problem, and setting the state information to a second state in response to acquiring the data; acquiring a solution of the combination optimization problem from the solver device; executing a process based on the solution; and changing the process based on the solution by the state information in executing the process based on the solution.

17. Circuit information written in a reconfigurable semiconductor device for operating the reconfigurable semiconductor device, the circuit information causing the reconfigurable semiconductor device to function as an information processing device executing processing on data, the processing comprising:

acquiring the data;
generating a combination optimization problem based on the acquired data and causing a solver device to solve the combination optimization problem;
setting state information to a first state in response to starting generation of the combination optimization problem, and setting the state information to a second state in response to acquiring the data;
acquiring a solution of the combination optimization problem from the solver device;
executing a process based on the solution; and
changing the process based on the solution by the state information in executing the process based on the solution.

# FIG.1

N-SIZE PROBLEM

# FIG.2

# FIG.3

```
         ┌──────────────┐
         │    START     │
         └──────────────┘
                │
                ▼
    ┌─────────────────────────┐
    │     ACQUIRE PROBLEM     │─── S11
    └─────────────────────────┘
                │
                ▼
    ┌─────────────────────────┐
    │       INITIALIZE        │─── S12
    └─────────────────────────┘
                │
                ▼
    ┌─────────────────────────┐
    │    REPEATED PROCESS     │─── S13
    └─────────────────────────┘
                │
                ▼
    ┌─────────────────────────┐
    │ EXECUTE y UPDATE PROCESS│─── S14
    └─────────────────────────┘
                │
                ▼
    ┌─────────────────────────┐
    │ EXECUTE x UPDATE PROCESS│─── S15
    └─────────────────────────┘
                │
                ▼
    ┌─────────────────────────┐
    │  EXECUTE WALL PROCESS   │─── S16
    └─────────────────────────┘
                │
                ▼
    ┌─────────────────────────┐
    │    REPEATED PROCESS     │─── S17
    └─────────────────────────┘
                │
                ▼
    ┌─────────────────────────┐
    │         OUTPUT          │─── S18
    └─────────────────────────┘
                │
                ▼
         ┌──────────────┐
         │     END      │
         └──────────────┘
```

# FIG.4

HOST DEVICE

$J, h$

$s^{opt}$

ISING MACHINE

$s_1$
$s_2$
$s_3$
$s_4$
$s_5$
$s_6$

# FIG.5

HOST DEVICE

$J, h, y^{init}$ →

SIMULATED BIFURCATION MACHINE

$x_1 \bigcirc \quad \bigcirc y_1$
$x_2 \bigcirc \quad \bigcirc y_2$
$x_3 \bigcirc \quad \bigcirc y_3$
$x_4 \bigcirc \quad \bigcirc y_4$
$x_5 \bigcirc \quad \bigcirc y_5$
$x_6 \bigcirc \quad \bigcirc y_6$

← $s^{opt}(x^{opt})$

# FIG.6

10

**MARKET SERVER DEVICE** 12

DISTRIBUTION UNIT 18

MATCHING UNIT 17

RECEPTION UNIT 16

MARKET STATE PACKET

ORDER PACKET

ORDER PACKET

ORDER PACKET

CLIENT DEVICE (INFORMATION PROCESSING DEVICE) 14(20)

CLIENT DEVICE 14

CLIENT DEVICE 14

# FIG.7

20

MARKET STATE
PACKET
(DATA)

12 →

ACQUISITION
UNIT  ⌒36

→ INPUT
MEMORY  ⌒32

→ PROBLEM
GENERATION
UNIT  ⌒42

SOLVER
DEVICE  ⌒40
WEIGHT
MEMORY  ⌒50

→ PROCESS
EXECUTION
UNIT  ⌒46

ORDER PACKET
(OUTPUT DATA)

→ 12

ACQUISITION NOTIFICATION

SOLVING START NOTIFICATION

STATE CONTROL
UNIT  ⌒44

STATE
INFORMATION

EP 4 498 292 A1

# FIG.8

ACQUISITION NOTIFICATION

SOLVING START
NOTIFICATION

CLEAN
STATE

DIRTY
STATE

ACQUISITION
NOTIFICATION

SOLVING START NOTIFICATION

# FIG.9

START

OUTPUT SOLUTION? ⌇S31 — NO

YES ⌇S32

ACQUIRE SOLUTION

⌇S33

GENERATE ORDER PACKET

CLEAN STATE? ⌇S34 — NO

YES ⌇S35

OUTPUT ORDER PACKET

# FIG.10

EP 4 498 292 A1

# FIG.11

EP 4 498 292 A1

# FIG.12

EP 4 498 292 A1

# FIG.13

EP 4 498 292 A1

# FIG.14

```
            START
              │
        ┌─────▼─────┐
        │     │     │              S31
        ▼           ◄───────────────────
       ╱ ╲                          NO
      ╱   ╲  OUTPUT SOLUTION?  ─────────►
      ╲   ╱
       ╲ ╱
        │ YES          S32
        ▼
   ┌─────────────────────┐
   │   ACQUIRE SOLUTION   │
   └──────────┬──────────┘
              │           S33
   ┌──────────▼──────────┐
   │ GENERATE ORDER PACKET│
   └──────────┬──────────┘
              │           S41
   ┌──────────▼──────────┐
   │   IDENTIFY GROUP     │
   └──────────┬──────────┘
              │
              ▼            S42
            ╱   ╲
           ╱     ╲   ELEMENT STATE
          ╱       ╲  INFORMATION        NO
         ╱ CORRESPONDING TO ╲ ─────────►
          ╲ IDENTIFIED GROUP IS IN ╱
           ╲   CLEAN STATE?  ╱
            ╲             ╱
              │ YES        S43
   ┌──────────▼──────────┐
   │  OUTPUT ORDER PACKET │
   └──────────┬──────────┘
              │
```

# FIG.15

EP 4 498 292 A1

# FIG.16

MARKET STATE
PACKET
(DATA)

12 → ACQUISITION UNIT (36) → INPUT MEMORY (32) → PROBLEM GENERATION UNIT (42) → SOLVER DEVICE (40) / WEIGHT MEMORY (50) → PROCESS EXECUTION UNIT (46) → ORDER PACKET (OUTPUT DATA) → 12

ACQUISITION NOTIFICATION

SOLVING START NOTIFICATION

STATE CONTROL UNIT (44)

STATE INFORMATION

20

# FIG.17

START

ACQUIRE PROBLEM ~S11

INITIALIZE ~S12

REPEATED PROCESS ~S13

DIRTY STATE? ~S51

YES

NO

EXECUTE Y UPDATE PROCESS ~S14

EXECUTE X UPDATE PROCESS ~S15

EXECUTE WALL PROCESS ~S16

REPEATED PROCESS ~S17

OUTPUT ~S18

END

# FIG.18

EP 4 498 292 A1

# FIG.19

EP 4 498 292 A1

# FIG.20

20

| | EUROPEAN SEARCH REPORT | | Application Number |
| --- | --- | --- | --- |
| | | | EP 24 15 9782 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | KOSUKE TATSUMURA ET AL: "Pairs-trading System using Quantum-inspired Combinatorial Optimization Accelerator for Optimal Path Search in Market Graphs", ARXIV.ORG, CORNELL UNIVERSITY LIBRARY, 201 OLIN LIBRARY CORNELL UNIVERSITY ITHACA, NY 14853, 12 July 2023 (2023-07-12), XP091561173, * abstract; sections 1, 3, 3.1, 3.2, 3.3 Appendix A Equations 2-4; figure 4 * | 1-17 | INV. G06N5/01 |
| | - - - - - | | |
| A | KOSUKE TATSUMURA ET AL: "Real-time Trading System based on Selections of Potentially Profitable, Uncorrelated, and Balanced Stocks by NP-hard Combinatorial Optimization", ARXIV.ORG, CORNELL UNIVERSITY LIBRARY, 201 OLIN LIBRARY CORNELL UNIVERSITY ITHACA, NY 14853, 12 July 2023 (2023-07-12), XP091561699, * abstract; sections 2, 3; figures 1-2 * | 1-17 | TECHNICAL FIELDS SEARCHED (IPC) G06N |
| | - - - - - | | |
| | -/-- | | |

The present search report has been drawn up for all claims

| Place of search | Date of completion of the search | Examiner |
| --- | --- | --- |
| The Hague | 8 August 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 15 9782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TATSUMURA KOSUKE KOSUKE TATSUMURA@TOSHIBA CO JP: "Large-scale combinatorial optimization in real-time systems by FPGA-based accelerators for simulated bifurcation", PROCEEDINGS OF THE 11TH INTERNATIONAL SYMPOSIUM ON HIGHLY EFFICIENT ACCELERATORS AND RECONFIGURABLE TECHNOLOGIES, ACMPUB27, NEW YORK, NY, USA, 21 June 2021 (2021-06-21), pages 1-6, XP058592546, DOI: 10.1145/3468044.3468045 ISBN: 978-1-4503-8549-7 * abstract; sections 2, 3; figures 1-3 * | 1-17 | |
| A | TATSUMURA KOSUKE ET AL: "FPGA-Based Simulated Bifurcation Machine", 2019 29TH INTERNATIONAL CONFERENCE ON FIELD PROGRAMMABLE LOGIC AND APPLICATIONS (FPL), IEEE, 8 September 2019 (2019-09-08), pages 59-66, XP033649156, DOI: 10.1109/FPL.2019.00019 [retrieved on 2019-11-05] * abstract; sections II, III, IV * | 1-17 | **TECHNICAL FIELDS SEARCHED (IPC)** |

The present search report has been drawn up for all claims

| Place of search | Date of completion of the search | Examiner |
|---|---|---|
| The Hague | 8 August 2024 | Tebbal Barracosa, B |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021060864 A
- JP 2019145010 A
- JP 2019 A
- JP 159566 A
- JP 2021043667 A
- JP 2021043589 A

**Non-patent literature cited in the description**

- **HAYATO GOTO** ; **KOSUKE TATSUMURA** ; **ALEXANDER R. DIXON**. Combinatorial optimization by simulating adiabatic bifurcations in nonlinear Hamiltonian systems. *Science Advances*, 2019, vol. 5, eaav2372

- **HAYATO GOTO** ; **KOTARO ENDO** ; **MASARU SUZUKI** ; **YOSHISATO SAKAI** ; **TARO KANAO** ; **YOHEI HAMAKAWA** ; **RYO HIDAKA** ; **MASAYA YAMASAKI** ; **KOSUKE TATSUMURA**. High-performance combinatorial optimization based on classical mechanics. *Science Advances*, 2021, vol. 7, eabe7953